(19) Europäisches Patentamt
European Patent Office
Office européen des brevets

(11) **EP 4 656 044 B1**

(12) **EUROPEAN PATENT SPECIFICATION**

(45) Date of publication and mention
of the grant of the patent:
**22.07.2026  Bulletin 2026/30**

(51) International Patent Classification (IPC):
**A01M 9/00** (2006.01)

(52) Cooperative Patent Classification (CPC):
**A01M 9/0007**

(21) Application number: **25178317.1**

(22) Date of filing: **22.05.2025**

(54) **METHOD AND DEVICE FOR GAS-ASSISTED DISTRIBUTION OF A PARTICULATE MATERIAL**

VERFAHREN UND VORRICHTUNG ZUR GASUNTERSTÜTZTEN VERTEILUNG EINES TEILCHENFÖRMIGEN MATERIALS

PROCÉDÉ ET DISPOSITIF DE DISTRIBUTION ASSISTÉE PAR GAZ D'UN MATÉRIAU PARTICULAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **27.05.2024  NL 2037788**

(43) Date of publication of application:
**03.12.2025  Bulletin 2025/49**

(73) Proprietor: **Koppert B.V.**
**2651 BE Berkel en Rodenrijs (NL)**

(72) Inventors:
• **VAN OIRSCHOT, Roeland Petrus Maria**
**2201 CZ Noordwijk (NL)**
• **RIETVELD, Maxine Ghislaine Jacqueline**
**2201 CZ Noordwijk (NL)**
• **VERHULST, Nicolas Hugues Willy**
**2201 CZ Noordwijk (NL)**

(74) Representative: **Patentwerk B.V.**
**P.O. Box 1514**
**5200 BN 's-Hertogenbosch (NL)**

(56) References cited:
WO-A1-2007/136246    WO-A1-2018/147733
WO-A1-2021/254946    FR-A1- 3 103 679
US-A- 5 429 278

## Description

## Background

The present invention according to a first aspect relates to a method for gas-assisted distribution of a particulate material in a target area. According to a further aspect the invention relates to a device for distributing particulate material using a gas flow. Such a device is suitable for performing the method according to the invention. Yet a further aspect of the invention relates to the use of the device for distributing particulate material.

Beneficial arthropods are presently frequently used in agriculture, for example for biological pest control. Examples of beneficial arthropods, used for this purpose, are predatory mites, parasite wasps and assassin-bugs. In addition, distribution of prey, such as Astigmatid mites, for predatory arthropods, such as predatory mites, may also be beneficial in a target area where the predatory arthropods are present. This provision of (Astigmatid) prey to the predatory arthropods may help in supporting the development and maintenance of the population of predatory arthropods (see for example Hogerbrugge et al. (2008), Integrated Control in Protected Crops, Temperature Climate, IOBC/wprs Bulletin Vol 32, pp. 79-82 and EP16154905).

In order to perform their function, such beneficial arthropods must be distributed (dispersed or dispensed) in a target area, such as a crop. In the state of the art this is done by manually dispersing the beneficial arthropods (possibly on a carrier) in the crop. Alternatively predatory mites may be dispersed by using sachets, wherein an amount of such predatory mites is present. Such sachets also must be hung manually in the crop. These methods are very labour-intensive.

In order to provide a saving of labour while distributing beneficial arthropods, various devices have been designed with which such beneficial arthropods may be dispersed by means of blowing. For example, WO2007/136246 discloses a methods and device with which such beneficial arthropods may be dispersed by means of blowing. A device disclosed in this published international patent application is marketed by Koppert Biological Systems under the trade name Airobug™. Although the method and device disclosed in WO2007/136246 already presented a major advancement in the distribution of beneficial arthropods, such as predatory mites, further improvements could be made with the invention of WO2018/147733 A further example of method and device for distributing particulate material is disclosed in FR 3 103 679 A1.

Still there is a need on the market for alternative and improved methods and devices for gas assisted distribution of particulate materials, in particular for distributing particulate materials comprising beneficial arthropods.

In view of the fact that many of the compositions comprising beneficial arthropods, the distribution of which was at the heart of the present invention, can be considered as compositions comprising particulate material, the skilled person will understand that the various aspects of the invention described have a broader utility and may be applied more generally to the distribution of compositions comprising particulate material.

## Summary of the invention

The invention thus according to a first aspect relates to a method for distributing particulate material. The method comprising:

(i) providing in a reservoir particulate material comprising particles to be distributed in a target area, which reservoir is provided with a number of exits for the particles;

(ii) providing a primary gas duct having a first end, a second end and a hollow body connecting the first end and the second end, wherein the primary duct body has a cross section, having an area, and a number of particle access openings, preferably connected to a number of exits in the reservoir;

(iii) providing a number of ancillary gas ducts each having a first end, a second end and a hollow body connecting the first end, and the second end, wherein each ancillary duct body has a cross section having an area, , wherein preferably the area of the cross section of the number of ancillary ducts is smaller than the area of the cross section of the primary duct and, wherein a number of ancillary ducts further have a number of particle access openings, preferably connected to a number of exits in the reservoir;

(iv) providing a number of gas displacers suitable for generating a forced gas flow in a blow direction;

(v) generating with a number of gas displacers a forced gas flow flowing in the primary gas duct from the first end to the second end and a forced gas flow flowing in a number of ancillary gas ducts flowing from the first end to the second end, wherein the gas velocity (m/s) in the primary gas duct is higher than the gas velocity (m/s) in the number of ancillary gas ducts, such that the volumetric gas flow ($m^3$/s) in the primary gas duct is higher than the volumetric gas flow ($m^3$/s) in the number of ancillary gas ducts;

(vi) directing the particles from the number of exits via a number of particle access openings in the forced gas flows flowing in the primary gas duct and in a number of ancillary gas ducts, such that the particles are carried along in the blow direction and exit the primary gas duct at its second end and exit the number of ancillary ducts at their second end.

According to a further aspect the invention relates to a device for distributing particulate material comprising particles, the device comprising:

(A) a reservoir suitable for holding the particles, which reservoir is provided with a number of exits for the particles;

(B) a primary gas duct having a first end, a second end and a hollow body connecting the first end and the second end, wherein the primary duct body has a cross section, having an area, and a number of particle access openings, preferably connected to a number of exits in the reservoir;

(C) a number of ancillary gas ducts each having a first end, a second end and a hollow body connecting the first end and the second end, wherein each ancillary duct body has a cross section having an area, wherein preferably the area of the cross section of the number of ancillary ducts is smaller than the area of the cross section of the primary duct and, wherein a number of ancillary ducts further have a number of particle access openings, preferably connected to a number of exits in the reservoir;

(D) a number of gas displacers suitable for generating a number of forced gas flows in the primary gas duct and in the number of ancillary gas ducts, which number of forced gas flows have a blow direction and are suitable to carry along the particles in their blow direction;

(E) means for directing the particles from a number of exits via the particle access openings in the primary gas duct and a number of ancillary gas ducts;

wherein the primary gas duct, and/or the number of ancillary gas ducts and/or the number of gas displacers are designed such that the gas velocity (m/s) in the primary gas duct is higher than the gas velocity (m/s) in the number of ancillary ducts such that the volumetric gas flow ($m^3$/s) generated in the primary gas duct is larger than the volumetric gas flow ($m^3$/s) in the number of ancillary gas ducts.

Yet a further aspect of the invention relates to the use of the device of the invention in the distribution of a particulate material comprising particles in a target area, such as a crop.

## Brief overview of figures

Figures 1A-1F show overviews of an embodiment of a device of the invention that is suitable for performing the method of the invention.

Figure 2 shows a cross section (along the longest axis) of an embodiment of a device of the invention that is suitable for performing the method of the invention.

Figure 3 shows a side view of the device of figures 1 and 2 showing elements of the mechanical transport system in the reservoir of the device.

Figure 4 shows a cross section of the device of figures 1-3, perpendicular to the cross section of figure 2.

Figure 5 shows pictures outlining the methodology followed to determine the distribution pattern resulting from using the method of the invention in a device of the invention.

Figure 6 shows an overview of the prototype used in experiment I.

Figure 7 shows a graphical representation of the normalized distribution (%) as presented in table I.

Figure 8 shows the particle size and particle density relation for particulate materials that could be distributed with the method of the invention.

Figure 9 shows the relation between the hydraulic diameter ($D_H$) and the length (L) of channels that could be used in the invention.

Figure 10 shows the relation between the hydraulic diameter ($D_H$) and the area of the outlet (A) of channels that could be used in the invention.

## Detailed description of the invention

In the method according to the invention an amount of particulate material is provided in a container. As the skilled person will understand, the form and material of the container are not relevant as long as the container is suitable for holding the particulate material. The container for example may be a cylindrical body, of which at least one, preferably both, of the circular openings is closed.

The term "particulate material" or "particulate matter" within the context of the present invention should be understood to mean a material composed of distinct particles. Particulate materials that are of particular interest, according to certain embodiments may be selected from particulate materials having applications in agriculture, in particular in connection to plant health, for example as biocontrol agents or products supporting the function of biocontrol agents. In this respect it is known to the skilled person that beneficial arthropods, such as predatory mites or Astigmatid prey mites may be presented in compositions in combination with a carrier, such as a carrier selected from for example sawdust, wheat bran, vermiculite, or chaff, such as chaff selected from rice husks or millet husks. Often such carriers are used in a moistened form. Such (moistened) carriers may be considered to be particulate materials. In addition, individual beneficial arthropods, on an abstracted level, may also be considered to be particles. Thus, a larger collection (or population) of beneficial arthropods may be considered to be a particulate material. The terms "particulate material", particulate material comprising particles" and their equivalent terms, thus within the context of the present invention includes and in particular mean "a composition comprising beneficial arthropods". "A composition comprising beneficial arthropods" may or may not comprise a suitable carrier such as mentioned above. The term "carrier" includes moistened versions. According to preferred embodiments a composition comprising beneficial arthropods does comprise a suitable carrier for the arthropod individuals. According to preferred embodiments the beneficial arthropods in the particulate material comprise adult life stages, in particular adult prey mites and/or adult predatory mites.

The particles of the particulate material are suitable for distribution by blowing. The skilled person will be able to determine whether the particles of the particulate material are suitable for distribution by means of blowing. According to certain embodiments a particulate material is selected having particles with a size distribution wherein the average particle size is 0.05-15.00 mm, such as 0.10-10.00 mm, preferably 0.25-10.00 mm, such as 0.50-2.00 mm, more preferably 0.25-7.00 mm. In general, particles within this size range may be suitable for distribution by blowing. According to some embodiments the particles have a longest axis (the particles are stretched or have a stretched shape) and the average particle size is considered over the longest axis of the particles. Examples of such particulate materials available with such an average particle size are saw dust, wheat bran, vermiculite, chaff, such as millet husks or rice husks.

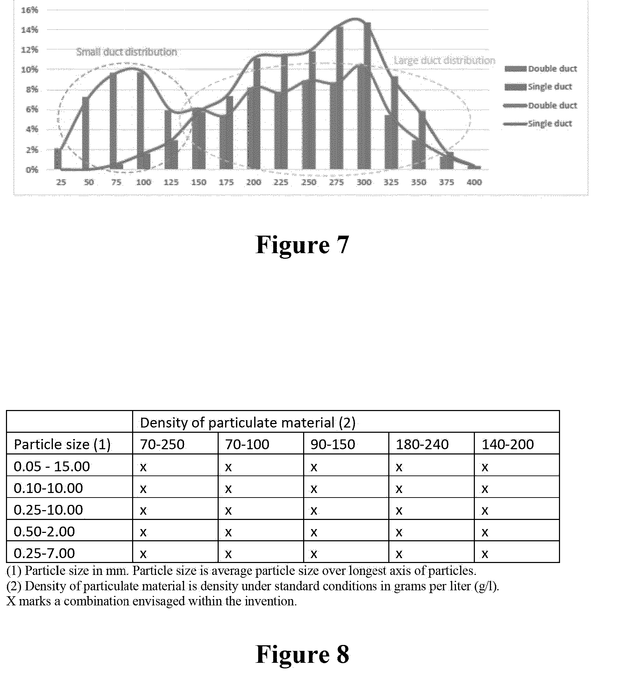

The particulate material according to certain embodiments has a density of 50-300 grams per litre (g/l), preferably 70-250 g/l, such as 70-100 g/l, 90-150 g/l, 180-240 g/ or 140-200 g/l. Particulate materials having a density within these ranges in general can be distributed relatively easily by means of blowing. Figure 8 shows combinations of average particle size and density of particles envisaged by the invention.

As is noted above, compositions comprising beneficial arthropods may be selected as the particulate material. The beneficial arthropods may be provided as such or in combination with a carrier. As the use of a carrier material is common for many beneficial arthropods, it should be understood that when solely the term "beneficial arthropods" or "arthropods" is used, these terms also encompass the combination with a carrier material. In connection to the present invention the term "arthropods" and "beneficial arthropods" are used interchangeably. Beneficial arthropods encompass all life stadia, inclusive eggs, nymphs (as far as these occur in a certain species), pupae (as far as these occur in a certain species), and adults of for example insects, such as parasite wasps and assassin-bugs and mites, such as predatory mites, for example phytoseiidae, such as described by De Moraes et al . (De Moraes, G. J. , J.A. McMurtry, H.A. Denmark & CB. Campos (2004). A revised catalog of the mite family Phytoseiidae. Magnolia Press Auckland New Zealand). Within the term "beneficial arthropods" also other arthropods, which may be useful in biological pest control or for any other human benefit are included. When an arthropod has a suitable size and/or form and/or mass to be distributed by means of blowing (i.e. by a forced gas flow), in principle it can be distributed by using the method according to the invention. The skilled person will be able to determine whether the arthropod is suitable for distribution (dispersion) by means of blowing.

In the invention a container for the particulate material is provided. The container comprises a number of exits for the particulate material. The term "container" should be understood to mean a holding body and thus is interchangeable with equivalent terms such as "reservoir" and "chamber". The skilled person will understand that in general a container has a void and will be able to provide a reservoir or holding space suitable for holding the particulate material. The number of exits in the container may be any suitable opening that allow the particulate material to exit from the container. Within the context of this invention, "a number of" comprises, each time the term is used, one or more, such as a plurality, for example 2, 3, 4, 5, 6, 7, 8, 9 or 10. In the language used in this description of the invention, the term may be used interchangeably in connection to the singular form or the plural. In general, within the context of this description of the present invention, singular forms and plurals of any term should be considered technically equivalent, unless the specific context implies differently.

For allowing the particulate material to exit from the number of exits they may be provided in a section of the reservoir that in the use position (the dispensing position) is a lower part, such that the particulate material may move towards the number of exits under the influence of gravity. The container may for example comprise a circumferential wall surrounding a void and having a first end and a second end at a distance from the first end and a base, the first base, said first base connected to the circumferential wall at the first end closing the void at the first end, said first base provided with a number of openings, suitable to allow particulate material to exit from the reservoir. The device disclosed in WO2020/145827 has a reservoir of this type and embodiments of this device could be used in the context of the present invention for releasing the particulate material in the primary gas duct and/or an ancillary gas duct.

Alternatively, a number of exits (in the use position) may be provided in a higher part of the container. This may for example be the case where the filling opening of the container serves as an exit. When a number of exits (in the use position) is provided in a higher part of the container, this may require mechanical transportation of the particulate material towards a number of exits. Such a mechanical transportation means may for example comprise a transport screw.

Preferably, the mechanical transportation means comprise a number of retaining elements, such as a number of ridges, or a number of scooping elements, such as a number of cups or curved plates, connected to a mechanically driven support, such as an endless support. Examples are for example conveyor belt systems, in which the revolving support (belt) can be considered as an endless support. According to a preferred embodiment of the invention, a mechanical transportation system is used comprising an at least substantially circular endless support. At least substantially circular includes circular. The benefit of using mechanical transportation to a number of exits in a higher position of the reservoir is, that the amount of particulate material provided (dosed) into the exits in the reservoir can be controlled and in some embodiments is less dependent on the volume of the particulate material in the container.

In the method a primary gas duct is provided having a first end, a second end and a primary duct hollow body connecting its first end, and its second end. The primary duct body has a cross section having an area and between the first end and the second end it has a primary duct length. In addition, in the method of the invention, a number of ancillary gas ducts is provided each having a first end, a second end and an ancillary duct hollow body connecting the first end, and the second end. Each ancillary duct body has a cross section having an area and between the first end and the second end of each ancillary duct it has an ancillary duct length.

The primary gas duct and the number of ancillary gas ducts provided are suitable for guiding a forced gas flow. The skilled person will be able to determine which requirements a gas duct should meet to be suitable for guiding a forced gas flow within the context of the present invention. As in general is the case for gas ducts, the primary duct and the number of ancillary ducts maybe formed by a barrier material, such as a plate material, enclosing an elongated chamber having a cross section.

The selection of suitable materials for forming gas ducts is within the ambit of the skilled person. Any material suitable for guiding and/or directing a forced gas flow may be selected. For example, metals, plastics or composite materials may be used. The use of metals, such as metals selected from steel or aluminium, according to certain embodiments is preferred. According to other embodiments the selection of plastics is preferred. Metals and plastics may also be used in combination.

The body of the primary gas duct and the number of ancillary gas ducts have a cross section. In principle the cross section of a gas duct may be selected from different geometric shapes, such as a circular, elliptical, rectangular, or triangular shape. For guiding forced gas flows, in the present invention it is most preferred that the cross section of the primary duct has a rounded shape, such as a circular or elliptical shape. In addition, in the present invention it is most preferred that the cross section of a number of ancillary ducts has a rounded shape, such as a circular or elliptical shape. The use of pipes and similar ducts as gas ducts is thus most preferred in the invention, both for the primary duct and the number of ancillary ducts. The use of a single ancillary duct is preferred according to certain embodiments, but where a plurality of ancillary ducts is used, it is not required that their cross sections all have the same shape and/or size.

It will be clear that the cross section of the primary gas duct and of the number of ancillary gas ducts has an area, expressible in $m^2$, $cm^2$ or $mm^2$. The cross section of consideration will be the cross section essentially perpendicular to the direction of the gas flow, i.e. the blow direction. For pipes in general this is the cross section perpendicular to the elongated body of the pipe.

It will be clear that a gas duct has an open beginning and an open end. The hollow body of the primary gas duct thus has a first open end and a second open end. Similarly, the hollow body of each of the number of ancillary gas ducts has a first open end and a second open end. Although the designations first and second are assigned arbitrarily, in the context of this invention reference to the second end, both for the primary gas duct and the number of ancillary gas ducts, will be a reference to the outlet of a gas duct, where the outlet is the point where a gas flowing in the gas duct exits. Reference to the first end, both for the primary gas duct and for the number of ancillary gas ducts, is a reference to the end of the gas duct in the direction from where the gas flow originates.

Thus, in the primary gas duct and in the number of ancillary gas ducts the gas flows from the first end to the second end.

The length of the primary gas duct body and of the number of ancillary gas duct bodies stretches between its first end and its second end. The length of the primary gas duct body may be the same or differing from the length of a number of ancillary gas duct bodies. Furthermore, when a plurality of ancillary ducts is used, the length of different ancillary ducts may by the at least similar, such as the same, or may be different.

In the method of the invention a number of gas displacers suitable for generating a forced gas flow in a blow direction is provided. The forced gas flow may be generated continuously or pulsating with a gas displacer. Within the contexts of this invention a gas displacer should be understood to be a device suitable for displacing gas, in particular air, for example by creating pressure differences. As a gas displacer use may be made of known means, such as for example rotors (inclusive propeller), of various designs, such as two bladed, three bladed, four bladed or other multiple bladed rotors (inclusive propellers and turbines). Alternatively, a gas container with a pressurised gas may be used as a gas displacer. When using one or more rotors these may be placed in a cylindrical rotor chamber, having an inlet and an outlet. The benefit of this is that the forced gas flow is channelled in the direction of the outlet. This gas flow is more directed in the direction of the axis of the rotor. The use of a rotor as a gas displacer is preferred for the present invention.

With the number of gas displacers a forced gas flow is generated in the blow direction in the primary gas duct. For this the number of gas displacers is positioned at the first end of the body of the primary duct. Preferably a gas displacer is positioned in the primary duct at the first end. In case the gas displacer is a rotor, the diameter of the rotor is thus preferably matched to the diameter of the primary duct. In case a gas displacer is positioned in a duct connected to the primary duct, it should be considered that the gas displacer is positioned in the primary duct. The gas flow generated at the first end of the primary gas duct travels through the hollow body of the primary gas duct and exits the primary gas duct at the outlet on the second end.

A gas flow flowing from the first end to the second end is also generated in the number of ancillary gas ducts. This may be achieved by providing a plurality of gas displacers, wherein the forced gas flows generated in the primary gas duct is generated by a number of different gas displacer(s) then the gas flow in the number of ancillary gas ducts. Preferably, gas flowing in the primary gas duct is partially diverted into a number of ancillary gas ducts. By using such a diversion of the primary gas flow, a single gas displacer can generate the gas flow both in the primary gas duct and the number of ancillary gas ducts. This diversion of the primary gas flow may be achieved by a gas diversion opening (the gas diversion inlet) in the primary gas duct that takes in part of the gas flow flowing in the primary gas duct. The gas diversion opening may be connected to a channel that directs the diverted gas into the ancillary gas duct.

When the primary gas flow is diverted into a number of ancillary gas ducts, it is further preferred that the gas velocity of the gas flow is reduced. This may be done by using an opening in the body of an ancillary duct in connection with the external air. Alternatively, the gas velocity may be increased, such as by means to decrease the area of the cross section of an ancillary duct body, in particular at the outlet.

According to the invention, the gas flow in the primary gas duct and in the number of ancillary gas ducts are generated such that the gas flow in the primary duct is higher than the gas flow in the number of ancillary ducts. The skilled person will understand that gas flow can be expressed as the volumetric flow, expressed in litre/s (l/s) or $dm^3$/s, or can be expressed as a mass flow, expressed in kg/s. Expression of gas flow as the volumetric flow is preferred within the context of this invention. The amount of gas that passes in a time unit, is dependent on the gas velocity, expressed in meter per second (m/s). Gas velocity under certain circumstances is easier to determine than volumetric gas flow. According to the invention the gas flow in the primary gas duct and in the number of ancillary gas ducts are generated such that the gas flow in the primary duct is higher than the gas flow in the number of ancillary ducts, in that the gas velocity in the primary gas duct is higher than the gas velocity in the number of ancillary gas ducts. Or expressed simpler, the gas flow in the primary gas duct and in the number of ancillary gas ducts are generated such that the gas velocity in the primary gas duct is higher than the gas velocity in the number of ancillary gas ducts. The differences in the gas velocity implies that the gas flow in the primary gas duct is higher than the gas flow in the number of ancillary gas ducts. The amount of gas that passes in a gas duct in a time unit, is also dependent on the area of the cross section of the duct in which the gas flows. According to certain embodiments it is thus preferred that the gas flow in the primary gas duct and in the number of ancillary gas ducts are generated such that the gas flow in the primary gas duct is higher than the gas flow in the number of ancillary gas ducts, in that the area of the cross section of the primary duct is larger than the area of the cross section of the number of ancillary gas ducts. Or expressed simpler, according to certain embodiments it is preferred that the area of the cross section of the primary gas duct is larger than the area of the cross section of the number of ancillary gas ducts. The differences in the area of the cross section implies that the gas flow in the primary gas duct is higher than the gas flow in the number of ancillary gas ducts. It is most preferred that the gas flow in the primary gas duct is higher than the gas flow in the number of ancillary gas ducts in that the gas velocity in the primary duct is higher than the gas velocity in the number of ancillary gas ducts and the area of the cross section of the primary gas duct is larger than the area of the cross section of the number of ancillary gas ducts. Or expressed simpler, the area of the cross section of the primary gas duct is larger than the area of the cross section of the number of ancillary gas ducts and the gas flow in the primary gas duct and in the number of ancillary gas ducts are generated such that the gas velocity in the primary gas duct is higher than the gas velocity in the number of ancillary gas ducts.

The area of the cross section of the primary gas duct and of the secondary gas duct need not be constant. According to certain embodiments it is preferred that the primary gas duct has a larger area at the first end than on the second end. Thus, the primary gas duct narrows in the direction from the first end to the second end. Due to this the gas velocity in the primary gas duct increases in the narrower part.

The primary gas duct and the number of ancillary gas ducts have a number of particle access openings for allowing entry op the particles into the gas ducts. It should be understood that for every gas duct via which particles are to be distributed, at least one particle access opening will be provided. Suitable particle access openings can be simple means such as openings in the body of the primary gas duct and the number of ancillary gas ducts. To facilitate entry of the particles into a gas duct while the forced gas flow flows through the gas duct, a shielding barrier located on the upstream (the direction from which the gas flow flows) side of an access opening may be provided. As is clear from the discussion above, the upstream side of the access opening is in the direction of the first end of the primary duct and the number of ancillary ducts. Behind (downstream) of the shielding barrier an under pressure is created that facilitates entry of the particles into the gas duct and the gas flow via the access opening. The barrier preferably is located at the circumference of an access opening. Preferably the shielding barrier has a rounded shape, as rounded shapes have a lower resistance in the gas flow. According to a preferred embodiment, an inward protruding particle channel may be connected to an opening in the body of the primary gas duct or of the number of ancillary gas ducts and optionally both. This inward protruding particle channel has a first end, a second send and a hollow body connecting the first end and the second end. With its first end it is connected to the opening in the body of the gas duct wherein it is located (the primary gas duct or an ancillary gas duct) and at the second end its outlet is located. When such as particle channel is used, the outlet of the particle channel may be considered the particle access opening. The outlet of the particle channel preferably faces in a direction at least substantially perpendicular, most preferably perpendicular, to the gas flow in the gas duct. This improves the outflow of the particles out of the particle channel, because the forced gas flow will flow along the opening. Most preferably particle access openings are located on the upper side of a gas duct, such that when particles are entered into the gas duct, and thus into the forced gas flow, under the influence of gravity they travel a distance trough the gas duct. This improves mixing of the particles in the forced gas flow, which improves their distribution.

According to the invention the particles are directed from a number of exits via a number of particle access openings in the forced gas flows flowing in the primary gas duct and in a number of ancillary gas ducts. The particles may be directed from the number of exits of the reservoir towards a particle access opening in a gas duct (either the primary duct and/or an ancillary duct) under the influence of gravity, mechanically, with the aid of gas pressure or combinations thereof. Suitable mechanical means will be known to the skilled person. Some have been discussed above. Use of gravity is preferable. When using gravity, the exits in the container for the particles will be placed above the particle access openings.

For directing the particles from the number of exits in the reservoir to the number of particle access openings, it is preferred that a particle access openings is connected to an exit in the reservoir. A single exit can be connected to a single particle access opening. Alternatively, a single exit can be connected to a plurality of particle access openings. In a further alternative, a plurality of exits is connected to a single particle access opening. It is preferred that a single exit is connected to a single particle access opening. The connection between an exit and a particle access opening may be a channel with a hollow body extending between a reservoir exit and a particle access opening.

The particles are introduced in the forced gas flows flowing in the primary gas duct and the number of ancillary gas ducts such that the particles are carried along in the blow direction. They will exit the primary gas duct and the number of ancillary gas ducts, at their outlet. Thus, when the primary gas outlet and the number of ancillary gas outlets (and the primary gas flow and number of ancillary gas flows exiting from the primary gas outlet and the number of ancillary gas outlets) are directed in the direction of a target area, the particles will be distributed in the target area. The forced gas flow in the primary ducts preferably has a power adjusted to blow the particles over an axial distance of at most about 0,5-8,0 metre, preferably about 3,0-6,0 metres, more preferably about 4,0-6,0 metres, most preferably about 5,0 metres. The skilled person will know that by adjusting the volumetric flow rate ($m^3 \cdot s^{-1}$) of the gas flow, the power of the gas flow can be influenced.

The number of forced gas flows in the number of ancillary gas ducts have a fraction of the power of the gas flow in the primary duct. Preferably the power of the gas flows in the number of ancillary gas ducts is adjusted to blow the particles over an axial distance of at most about 0,1-4,0 metres, preferably about 0,2-3,0 metres, more preferably about 0,2-3,5 metres, most preferably at most about 0,8-2,2 metre. Thus, the gas flow from the primary duct and from the number of gas flow from the number of ancillary ducts have a differing distribution pattern of the particles of the particulate material. The combination of these distribution patterns creates an enhanced flexibility in the distribution of particles from a particulate material. According to certain embodiments this improves the overall distribution pattern that may be obtained.

From the total of particulate material (g/s) entered in the primary gas flow and in the number of ancillary gas flows together, a fraction < 50%, such as 10%-45%, preferably 15%-35%, in particular 20%-30%, is entered into the gas flows flowing in the number of ancillary gas ducts. It is preferred, in particular when a single ancillary duct is used, that the fractions of the amount (g/s) of particulate materials directed towards the primary duct (amount 1) and to the number of ancillary ducts (amount 2) relative to the summed amount (amount 1 + amount 2) of particulate material distributed in the primary gas flow and the number of ancillary gas flows is proportional to the fractions of the maximal distribution distance of the primary gas flow (distance 1) and respectively the number of ancillary gas flows (distance 2) relative to their summed maximal distribution distance (distance 1 + distance 2). Thus it is preferred, in particular when a single ancillary duct is used, that (amount 1)/(amount 1 + amount 2) is proportional to (distance 1)/(distance 1 + distance 2) and that (amount 2)/(amount 1 + amount 2) is proportional to (distance 2)/(distance 1 + distance 2). Proportional means about equal, such as within a 5-10% difference. For example, when a single ancillary gas duct is used, it is preferred that when the maximal distribution distance of the primary gas duct is set at about 4,5 meter and the maximal distribution distance of a single ancillary gas duct is set at about 2,0 meter, about 70% ((4,5/6,5)*100%) of the particulate material is directed towards the primary duct and about 30% ((2/6,5) * 100%) of the particulate material is directed towards the single ancillary duct.

It is preferred that the gas flows generated in the primary gas duct and in an ancillary gas duct are separately adjustable. When the number of forced gas flows in the primary gas duct and in the number of gas flows generated in the number of ancillary gas ducts are generated by different gas displacers, the gas output of the different gas displacers could be differentially adjusted to generate different gas flows in the primary duct and the number of ancillary ducts. For example, if the plurality of gas displacer comprises a plurality of rotors, the output of the motors driving different rotors could be adjusted differentially. When the primary gas flow is diverted into a number of ancillary gas ducts, preferably by a gas diversion inlet, and the gas flow generated in the primary gas duct at least partially is used to generate the gas flow in the number of ancillary gas ducts, it is preferred that in a number of ancillary gas ducts means are provided that modify the gas flow in the ancillary gas duct. For example, the gas flow in the ancillary duct may be modified by a reduction of the gas velocity e.g. by allowing external air to enter the ancillary duct. The external air may be allowed to enter the ancillary duct via a number of air suction openings, such as a number of air suction openings in the body of the ancillary duct. Alternatively, when the gas flow from the primary duct is injected into an ancillary duct, such as via an injector, e.g. a nozzle, there may be an open space for air suction at the injection point due to the area of the cross section of ancillary duct being larger that the size of the area of the cross section of the injector. The suction of exterior air into an ancillary duct via a number of air suction openings under influence of the forced gas flow in the ancillary duct, reduces the speed of the forced gas flow in the ancillary duct.

The amount of gas flowing into the opening of the gas diversion inlet according to certain embodiments can also be regulated by positioning a slidable plate in or on the opening of the gas diversion inlet. By this the area of the gas diversion opening can be changed. Thus, the gas flow flowing to the ancillary duct can be changed.

According to certain preferred embodiments of the invention, the area of the cross section of the number of ancillary ducts is smaller than the area of the cross section of the primary duct. Due to this, at the same or at a similar gas velocity, the volumetric gas flow through the primary duct may be larger than in the number of ancillary ducts. Thus, if part of the forced gas flow flowing in the primary gas duct is directed to such an ancillary duct having a cross section with an area smaller than the area of the cross section of the primary duct, the gas flow ($m^3$/s) will be smaller in the ancillary gas duct.

According to a preferred embodiment of the invention, the primary gas duct and a number of ancillary ducts are designed such that the primary gas flow and the number of ancillary gas flows have at least substantially parallel directions. Substantially parallel should be understood to mean that the directions are in essence parallel, but only in minor aspects deviate from perfectly parallel. Substantially parallel includes deviations of < +/- 7°, such as < +/- 5°, < +/- 3°, < +/- 1°. Preferably the primary gas duct and a number of ancillary ducts have parallel directions. The direction to consider is the direction of the core of the primary gas flows and the number of ancillary gas flows at the outlet of the primary gas duct and the number of ancillary gas ducts.

It is further preferred that the centres of the primary gas flow and the number of ancillary gas flows are relatively close together. This not only makes the device more compact, but according to certain embodiments also is beneficial for the interaction of the number of ancillary gas flows with the primary gas flow. For this the distance (x) between the centre axis of the primary duct and the centre axis of an ancillary duct, is less than the sum of 0.5 times the diameter (d1) of the primary duct and 4.5 times the diameter (d2) of the ancillary duct, such that $x \leq (0.5*d1)+(4.5*d2)$, such as $x \leq (0.5*d1)+(4.0*d2)$, $x \leq (0.5*d1)+(3.5*d2)$, $x \leq (0.5*d1)+(3.0*d2)$, $x \leq (0.5*d1)+(2.5*d2)$, $x \leq (0.5*d1)+(2.0*d2)$, $x \leq (0.5*d1)+(1.5*d2)$, $x \leq (0.5*d1)+(0.5*d2)$, preferably $x \approx (0.5*d1)+(0,5*d2)$. According to these preferred embodiments the centre axis of an ancillary duct is thus not more than twice its diameter away from the centre axis of the primary duct. The distance (x) is the shortest distance between the centre axes, in particular perpendicular to at least one of the axes and preferably both of the centre axes (when the primary gas duct and secondary gas duct are parallel). It should be understood that the centre axes are abstract axes through the centre point of the cross section of the primary gas duct respectively the number of ancillary gas ducts, in particular the cross section perpendicular to the direction of the gas flow therein, and that the abstract centre axes may extend beyond the primary duct and secondary duct. Preferably the primary gas duct and the number of ancillary gas ducts adjoin. The skilled person will be able to determine the diameter of the gas ducts.

According to certain preferred embodiments, the length of a number of ancillary ducts differs from the length of the primary ducts. More preferably the length of a number of ancillary ducts is shorter than the length of the primary duct. The lengths to considered are the lengths between the first end the second end of the primary gas duct and the number of ancillary gas ducts. It has been found that when the length of a number of ancillary ducts is shorter than the length of the primary duct, the gas flow from the number of ancillary ducts cooperates better with the gas flow from the primary duct.

According to preferred embodiments, in the primary gas duct a plurality of gas flow modification channels is provided, each channel comprising an inlet, an outlet and a hollow body connecting the inlet and outlet, wherein the inlets are designed such that at least a part of the forced gas flow flows through the channels and the outlets are designed to direct the gas outflows in substantially the same direction, more preferably in the same direction. The use of such a plurality of gas flow modification channels to modify a forced gas flow is disclosed in WO2018/147733. It has surprisingly been observed that the use of the gas flow modification channels not only beneficially influences the particle distribution of the primary gas flow, but also of an ancillary gas ducts operating in conjunction with the primary gas flow.

The gas flow modification channels may be any type of channels suitable for conveying, transporting or guiding the forced gas flow. A channel thus may be any type of duct, canal, vessel or conduit suitable for conveying, transporting and/or guiding the forced gas flow within the primary gas duct. Suitable gas flow modification channels may have an inlet and an outlet and a hollow body connecting the inlet and outlet. The body of a channel will have a wall, the channel wall having a channel surface in the hollow interior of the channel. In addition, the body of the channels will have an external surface having an external circumference. The inlet and outlet of a channel are positioned at a distance from each other. The skilled person will understand that such channels, as used in the invention, thus comprise a hollow body having a first opening, the inlet, connecting the interior of the hollow body with the exterior, and at a distance from the first opening a second opening, the outlet, connecting the interior of the hollow body with the exterior. The hollow body preferably is elongated.

The bodies of the gas flow modification channels in their cross section may have any form (or shape) suitable for conveying (or guiding) the forced gas flow. When referring to the cross section of the bodies of the channel, reference is made to the cross section of the hollow interior of the body. For example, the channels may have in cross section a rectangular form, such as a square form, a circular form, an ellipsoid form, a triangular form, or a different geometric form such as a hexagonal or pentagonal form. Alternatively, the cross section of the bodies of the channels may have an irregular form. The form of the cross section of a channel may also be different over the length of the body of the channel. It should be noted that in the present invention a plurality of channels is used and that channels used may have cross sections having different forms (or shapes). The use of channels that can be easily positioned in adjoining positions is preferred. Channels having a substantially straight configuration are beneficial in connection to this. Channels having a substantially straight or straight configuration will have a (substantially) straight (imaginary) axis. In addition, channels having an external circumference with a rectangular shape, such as a square shape, are further also beneficial in view of this. Preferably the straight configuration and rectangular shape of the external circumference are combined in selected channels.

As the skilled person will understand, the inlet and outlet of the gas flow modification channels will have a circumference, that corresponds to the inner surface of the hollow body at the inlet respectively the outlet. When referring to the shape or form of the inlet or outlet reference is made to the shape or form enclosed by the circumference. In general, the inlet and outlet will have a form (or shape) similar to the cross section of the body of their channel. However, it is possible that the inlet and/or outlet of a channel are shaped different from the cross section of the body of their channel. A differing shape may for example result from the plane of the inlet and/or outlet not coinciding with a perpendicular section of the body of the channel, but instead coinciding with a section under an angle. The skilled person will for example understand that when a section is made under an angle in a channel having a circular cross section this will result in an ellipsoid form. The gas flow modification channels used thus according to some embodiments may have an inlet and/or outlet that coincide with a section of the body of the channel that has an angle ($\alpha$) with a cross section of the channel. This angle ($\alpha$) between the plane of the inlet and/or the outlet and the cross section of the body of the channel may for example be $\leq 70°$, such as $\leq 60°$, such as $\leq 50°$, such as $\leq 25°$, such as $\leq 20°$, such as $\leq 15°$, such as $\leq 10°$, such as $\leq 5°$, such as $\leq 3°$, such as $\leq 2°$, such as $\leq 1°$. According to certain embodiments, the angle ($\alpha$) between the plane of the inlet and/or the outlet and the cross section of the body of the channel is between 0-70 °, such as 0-70°, such as 0-60°, such as 0-50°, such as 0-40°, such as 0-30°, such as 0-20°, such as 0-15°, such as 0-10°, such as 0-5°, such as 0-3°. Most preferably the channels used have an inlet and outlet that coincide with a substantially perpendicular or perpendicular section of the body of the channel. The plane of the inlet and/or outlet need not be a flat plane but according to certain embodiments may be curved.

In the plane of the inlet and/or outlet and of the cross section of the body of the channel a (theoretical) centre point can be defined. On the basis of his common general knowledge, the skilled person will be able to determine the centre point of the selected inlets, outlets and cross section of the channel body. The length (L) of the channel according to certain embodiments corresponds to the length of the centre line of the channel between the centre point of the inlet and the centre point of the outlet. As the skilled person will know and understand, the centre line of a channel (or duct) is a (theoretical) line going through the centres of the total of cross sections of the channel having an infinitesimal width.

The inlet and outlet of the gas flow modification channels preferably are located at or near the ends of the elongated body. An inlet or outlet is considered to be located near the end of the elongated body in case the distance of the position of its centre point to the respective end of the body is less than 1/3rd, preferably less than 1/4th, more preferably less than 1/5th, more preferably less than 1/10th of the total length of the body. When the position of the centre point of the inlet or outlet is located at the end of the hollow body, the distance to the end of the hollow body will be 0, for example 0 cm or 0 mm. Such a 0 distance is also less than 1/3rd, such as less than 1/4th, such as less than 1/5th, such as less than 1/10th of the total length of the body.

In case an elongated body is used wherein the inlet and outlet are located at or near the ends of the elongated body, it is preferred that the elongated body has a straight geometry or a smoothly curved form. By providing an elongated body having a straight geometry or a smoothly curved form, the chance that gas velocity and/or pressure is lost during the flow of the forced gas flow through the elongated body of the channels is reduced. The use of an elongated body having a substantially straight or straights geometry is most preferred. It is further preferred that there is a substantially straight or straight passage from the inlet to the outlet. In case the forced gas flow need not pass any corners during its passage from the inlet to the outlet, the chance that gas velocity and/or pressure is lost during the flow of the forced gas flow through the elongated body of the channels is reduced. The skilled person will understand that there is an substantially straight passage between the inlet and outlet, in case an imaginary straight line can connect the inlet and the outlet without 'cutting' the channel wall, preferably by connecting the centre point of the inlet and the centre point of the outlet. Again, by providing a substantially straight passage from the inlet to the outlet, the risk that gas velocity and/or gas pressure is lost during the passaging of the forced gas flow from the inlet to the outlet is prevented. It is preferred that the bodies of the channels are at least substantially closed such that the forced gas flow enters at the inlet and exits at the outlet and substantially does not exit elsewhere from the body of a channel.

The plurality of gas flow modification channels used in the invention, according to a preferred embodiment, are positioned at least substantially parallel. In their parallel positioning the axis of the channels preferably is at least substantially parallel with the blow direction. As the skilled person will understand this improves the flow of the forced gas flow through the channels.

For the gas flow modification channels used, according to some embodiments, the relation between the length (L) of the channel and the hydraulic diameter $D_H$ of the inlet or outlet, preferably the hydraulic diameter $D_H$ of the outlet, is such that $0.01 \leq D_H/L \leq 10$, wherein $D_H = 4A/P$, (A) being the area of the of the inlet or respectively the outlet available for gas flow and (P) being the so called "wetted" perimeter or contact perimeter of the outlet or respectively the inlet. The contact perimeter (P) is the perimeter of the inlet, respectively the outlet that is in contact with the gas flow. As such (P) may be expressed as follows:

$$P = \sum_{i=0}^{\infty} l_i$$

wherein ($l_i$) is the length of each surface in contact with the gas flow. According to some embodiments (P) corresponds to the circumference of the inlet or outlet.

The length (L) of the channel according to some embodiments is as defined above, i.e. the length of the centre line of the channel between the centre point of the inlet and the centre point of the outlet. The relation $D_H/L$ according to certain embodiments may have a value from 0.01 to 10, such as 0.05-8, such as 0.07-6, such as 0.07-4, such as 0.07-2, such as 0.07-1, such as 0.07-0.8, such as 0.1-0.4. For clarity, the stated endpoints of the ranges are within the values envisaged for the present invention.

According to some embodiments the hydraulic diameter $D_H$ of the outlet is similar or identical to the hydraulic diameter $D_H$ of the inlet (and vice versa). According to certain embodiments it is further preferred that for selected channels, the hydraulic diameter $D_H$ of the cross section of their body is identical to the hydraulic diameter $D_H$ of the outlet. It is further preferred in such cases that over a length of 0.3L-1L, such as 0.5L-1L, preferably 0.8L-1L, (L) being the length of the channel, the hydraulic diameter of the cross section of the channel body is identical to the hydraulic diameter $D_H$ of the outlet. The part of the channel having an identical $D_H$ for its cross section as the outlet, preferably is adjoining the outlet.

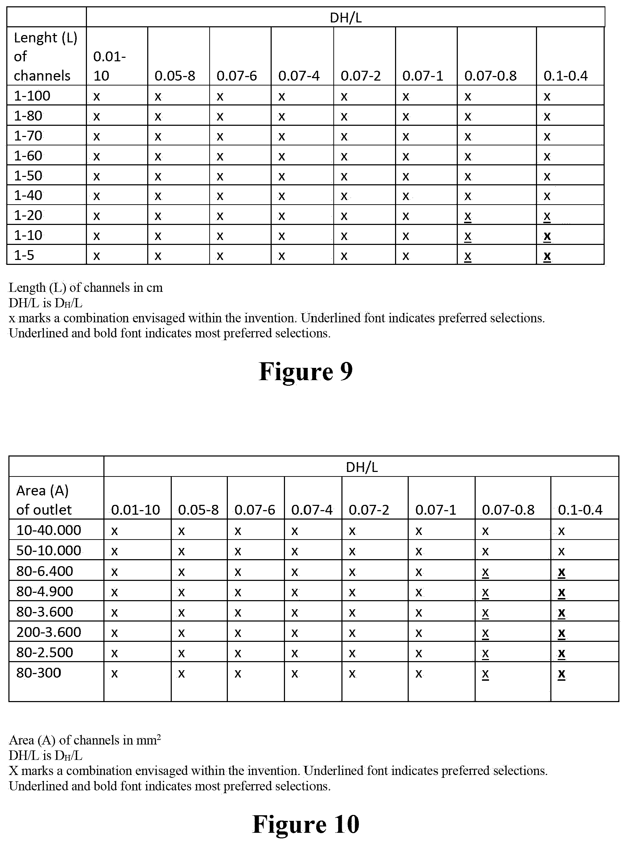

The length (L) of the channels according to some embodiments may be between 1 and 100 cm, such as 1-80 cm, such as 1-70 cm, such as 1-60 cm, such as 1-50 cm, such as 1-40 cm, such as 1-20 cm, preferably between 1-10 cm, such as 1-5 cm. Combinations of $D_H/L$ values with the length (L) of the channels envisaged by the present invention are presented in figure 9.

The area (A) of the outlet of the gas modification channels according to some embodiments may have a value of between 10 mm$^2$ and 40.000 mm$^2$, such as 50-10.000 mm$^2$, such as 80-6.400 mm$^2$, such as 80-4.900 mm$^2$, such as 80-3.600 mm$^2$, alternatively as 200-3.600 mm$^2$, such as 80-2.500 mm$^2$, such as 80-300 mm$^2$. For clarity, the stated endpoints of the ranges are within the values envisaged for the present invention. It should be noted that the area of the inlet may differ from the area of the outlet. As such the area of the inlet may also be outside the ranges specified for the area of the outlet. However, according to certain preferred embodiments, the area of the inlet is within the ranges specified above for the outlet. Channels having an inlet and an outlet having a similar or the same area are preferred. Combinations of the $D_H/L$ values with the area (A) of the channels envisaged by the present invention are presented in figure 10.

The selection of suitable materials for forming the channels is within the ambit of the skilled person. Any material suitable for guiding the forced gas flow may be selected. For example, metals, plastics or composite materials may be used. The use of metals, such as metals selected from steel or aluminium, according to certain embodiments is preferred. According to other embodiments the selection of plastics is preferred.

The outlets of the plurality of the gas flow modification channels in the invention are designed to direct the gas outflows in the same direction. The term "designed" and equivalent terms when referring to outlets (and also to inlets) of the channels may include the shape, dimension and arrangement, such as the arrangement relative to the forced gas flow and/or the arrangement relative to other channels, of the channel. "In the same direction" means that the gas outflows substantially have an identical direction and thus that the direction of the gas outflows are substantially parallel. When considering the direction of a gas flow in the context of this invention, the direction of the core of the gas flow is considered. In certain embodiments the direction of the core of the gas flow is the direction of the centre line of the gas flow. Directing the outflows of gas going through the channels in the same direction may be accomplished by arranging the outlets of the plurality of channels such that the planes of the outlets are substantially parallel. For this the outlets may be arranged in a grid-like arrangement. In the context of the present invention, the gas outflows are considered directed in the same direction in case the core of the gas flows have the same direction. In case the core of the gas flows have the same direction such gas flows can be considered to be substantially parallel. Within this description and the attached claims the term "substantially" means "with little or no deviation". "Substantially parallel" within this description and claims of the invention thus should be understood to mean, "in essence parallel", meaning with little or no deviation from parallel. "At least substantially parallel" means substantially parallel or parallel. In view of the fact that in practice there is always some deviation from perfect parallel and some degree of error tolerance is always acceptable, it should be understood that where in connection to this invention reference is made to parallel, this includes parallel and substantially parallel. According to certain embodiments (substantially) parallel is (substantially) parallel in all directions.

According to certain embodiments used outlets have a stretched rectangular shape. These may be positioned such that the longest axis has a horizontal position or a vertical position. The selection of outlets having a stretched rectangular shape having a vertical longest axis is preferred over outlets have a stretched rectangular shape having a horizontal longest axis.

The outlets of the gas flow modification channels according to some embodiments are arranged such that the outlet of at least one other channel is positioned in its proximity. According to the invention an outlet is considered to be in the proximity of another, in case the distance (d) between their external circumferences is such that $d \leq a$, preferably $d \leq 0.5a$, more preferably $d \leq 0.2a$, such as $d \leq 0.1a$, where (a) is the diameter of the outlet under consideration having the smallest diameter.

According to some embodiments, it is preferred that at least a part of the plurality of gas flow modification channels are adjoining. The term adjoining should be understood to mean that the channels abut. The channels may be (at least partially) adjoining or abutting in that their bodies (at least partially) contact. It is preferred that at least partially adjoining channels adjoin at the outlets. At least partially within this description of the invention includes the terms substantially and completely. According to certain embodiments channels adjoin over the full length of their channel bodies. Channels may have shared walls such as for example is the case in a grid, wherein for example the opposite side of a left wall of a first channel is the right wall of a second channel and vice versa. According to certain preferred embodiments substantially all or all of the plurality of channels are positioned in an (at least partially) adjoining configuration. The positioning of the channels in an adjoining configuration reduces the fraction gas flow outside the channels. This may provide a more uniform flow pattern in the forced gas flow when it exits the plurality of channels.

The skilled person will understand that the kinetic energy and/or momentum carried by the forced gas flow is a factor that is decisive for the potential of the forced gas flow to carry along particles. Therefore, according to the invention, at least part of the forced gas flow is directed through the channels. This is achieved by designing the inlets such that at least a part of the forced gas flow flows through the channels. In general, the inlets will have a shape, dimension and arrangement to allow a gas flow to enter the channels. As the skilled person will understand, this means that the inlets will have a shape, dimension and arrangement to allow a gas flow to enter and flow though the hollow body of the channels. This may be accomplished by arranging the inlets of the channels such that the planes of the inlets are substantially parallel. For this the inlets may for example be arranged in a grid-like arrangement. The skilled person will understand that the total area of the inlets, the area of the individual inlets and the position of the inlets relative to the gas displacer are factors that influence the fraction of the forced gas flow that will flow through the channels.

According to certain embodiments, the fraction of the gas volume flow rate (volume of gas per unit time for example expressed in $m^3/s$) of the forced gas flow flowing through the channels is over 50% (> 50%). The skilled person will be able to determine the free gas volume flow rate generated by the gas displacer (when not arranged with the channels in the gas flow). The skilled person will also be able to determine the gas volume flow rate after the forced gas flow has passed through the arrangement of channels. On the basis of this the skilled person will be able to determine the fraction of the gas volume flow rate of the forced gas flow flowing through the channels by dividing these values and optionally converting the fraction to a percentage. The term "over 50%" in connection to this invention, whenever used, includes 51%-100%, such as 55%-100%, such as 60%-100%, such as 70%-100%, such as 75%-100%, such as 80%-100%, such as 85%-100%, such as 90%-100%, such as 95%-100%, such as 96%-100%, such as 97%-100%, such as 98%-100%, such as 99%-100%. It is most preferred that over 90%, such as over 95% of the forced gas flow in the primary gas duct flows through the plurality of gas flow modification channels. According to certain embodiments substantially all of the forced gas flow in the primary duct flows through the plurality of gas flow modification channels.

The positioning and/or design of the inlets of the channels according to certain embodiments is such, that this facilitates the directing of the major part of the forced gas flow through the channels. For this, according to certain embodiments, it is preferred that the positioning of the inlets of the channels relative to each other is such that they form a condensed stacking with little or no space left in between the inlets. This may be achieved by using a grid like configuration. The shape of the inlets in such a grid may be a rectangular shape, such as a square shape, or may be a different shape, such as a triangular, hexagonal or pentagonal shape. When a grid is used, the shape and size of selected inlets need not be uniform and may differ. In case inlets having a circular shape are selected, these may be positioned in a honey comb-like configuration or pattern. When using grid-like or honey comb-like configurations it is preferred that the thickness of the walls of the bodies of the channels are minimized, at least at the position of the inlet. This minimizes obstructions for the forced gas flow and may reduce pressure and/or energy losses in the forced gas flow. The use of steel plates, such as stainless steel plates, is preferred in connection to this in view of the high structural integrity at low thickness.

In the method according to the invention the primary gas duct and ancillary gas duct forced gas flows are preferably generated or directed from an elevated point, such as above, relative to the target area wherein the particles are to be distributed. As the skilled person will understand, the direction of the forced gas flows is towards (a part of) the target area where the particulate material is to be distributed. Thus, the forced gas flows can carry the particles of the particulate material towards the (part of) the target area where they are intended to be distributed. Under the influence of gravity they will fall onto the surface of the target area. The target area may be a crop or any other area where the presence of the particles of the particulate material may be required. Alternative, in case the particulate material comprises beneficial arthropods, according to certain embodiments, the target areas where the beneficial arthropods may be distributed are stables for poultry or other farm animals. In such stables selected beneficial arthropods may be used to control pest arthropods that parasitize on the farm animals, such as the poultry red mite which parasitizes on amongst others chickens. It is within the ambit of the skilled person to select suitable beneficial arthropods that may predate on such pest arthropods. For example, as is known, predatory selected from the genera *Hypoaspis,* for example *Hypoaspis aculeifer; Cheyletus,* for example *Cheyletus* eruditus; *Androlealaps,* for example *Androlaelaps casalis*; or *Macrocheles,* for example *Macrochelus robustulus* may be used as predators of poultry red mite (see for example WO2010/079353).

The method of the invention according to some preferred embodiments is performed by using a device (discussed below) carried by a human operator, more preferably a handheld device. When the target area is an area close to the floor or ground level, generating or directing the forced gas flows from an elevated point relative to the target area may already be achieved by the operator holding the primary gas duct and the number of ancillary gas ducts and their outlets at an elevated point relative to (a part of) the target area. While simultaneously distributing the particles via the primary gas flow and the number of ancillary gas flows, the primary gas duct and the number of ancillary gas ducts (and their outlets) may be moved, preferably in an at least by approximation straight movement, such as a straight movement, relative to, such as along the target area. Moving the primary duct outlet and the number of outlets of the number of ancillary gas ducts preferably takes place in a substantially horizontal plane. In addition to this, moving the primary duct outlet and the number of outlets of the number of ancillary gas ducts preferably is such that the direction of movement has a directional component perpendicular to the direction of the gas displacement. Most preferably the primary duct outlet and the number of outlets of the number of ancillary gas ducts are moved in a substantially horizontal plane, substantially perpendicular to the direction of the forced gas flow. It will be clear that when the primary ducts outlet and the number of outlets of the number of ancillary ducts are moved, the connected primary ducts and respectively number of ancillary ducts in many embodiments will also move in the same way.

A direction having a directional component perpendicular to the direction of the forced gas flow is, such as the skilled person will understand, a direction deviating from the direction of the forced gas flow or deviating from the opposite direction. Or in other words, the direction having a directional component perpendicular to the direction of the forced gas flow makes an angle with the direction of the forced gas flow larger than 0° and smaller than 180°.

When the method of the invention is performed by using a device carried by a human operator moving the primary duct outlet and the number of outlets of the number of ancillary gas ducts (and any parts connected to it) may be achieved when the operator moves, such as by walking or by a being positioned on an automated transport system, such as a cart. According to other embodiments, the primary duct outlet and the number of outlets of the number of ancillary gas ducts (and any parts connected to it) may be moved automatically, for instance by using an automated transport system. Examples of such transport systems are rolling and hanging transport systems, for instance a monorail system used for spraying robots known in the greenhouse agriculture, as is disclosed in WO2007/136246 and WO2018/147733. In an embodiment of the method according to the invention the primary duct outlet and the number of outlets of the number of ancillary gas ducts (and any parts connected to it) may be moved by means of a spraying robot.

In a further embodiment of the method multiple primary gas ducts having their outlets facing in differing directions are provided, in analogy to what is disclosed in WO2007/136246 and WO2018/147733. These two differing directions preferably are essentially opposite to each other. As is clear from this description, according to other preferred embodiments, the differing directions include opposite directions. In all directions of the gas flow coming from the primary gas duct, the method may be performed in accordance to one of the above mentioned embodiments.

In a further preferred embodiment of the invention a nebulised fluid is directed into the primary gas flow and/or the number of ancillary gas flows. Particles such as beneficial arthropods may comprise allergens. Also, beneficial arthropods such as predatory mites may be combined with other mites or other arthropods, for example such as in the mite composition described in WO2006/057552. These added mites, or other arthropods may also be a source of allergens. Due to blowing of the particles of particulate material comprising arthropods their allergens may be spread. This may cause problems to persons who are (over) sensitive to these allergens. It has been shown that nebulising a fluid in the forced gas flows reduces problems in relation to spreading of allergens. It is believed that the allergens at least partially are captured in the nebulised fluid, and thereby settle faster. Means for nebulisation of fluids are known to the skilled person.

The nebulised fluid may suitably be selected from water and solutions comprising water. For certain applications, such as for the distribution of certain life stages of certain arthropods, such as pupae or eggs, it is preferred to add an adhesive to the nebulisation fluid. Hereby these life stages may stick to various substrates such as plant parts. A suitable adhesive is for example carboxymethylcellulose.

The method according to the invention is applicable broadly in any field where distribution of particles from a particulate material is desirable, for example in agriculture in general and (greenhouse) horticulture in general, but also in life stock breeding, such as the poultry industry dairy farming or cattle farming. Of particular interest is that the method according to the invention makes it possible to distribute particulate materials comprising beneficial arthropods efficiently in agricultural production systems, such as crop production systems. This is especially of interest where the crops are grown in beds having little or no access, such as used in the production of Rosa and Chysanthemum species. However, as the skilled person will understand the potential utility of the invention is much broader, such as in the poultry industry, dairy farming or cattle farming.

The invention further relates to a device suitable for performing the above described method. The device comprises a reservoir suitable for holding a particulate material comprising particles that may be distributed by blowing. The reservoir is provided with a number of exits for the particles.

The device also comprises a primary gas duct having a primary duct length, a primary duct diameter and a primary duct outlet and further having a number of particle access openings, preferably connected to a number of exits in the reservoir. The function, operation and suitable means that may serve as a primary gas duct are already discussed in relation to the method according to the invention.

In addition, the device comprises a number of ancillary gas ducts having an ancillary duct length, an ancillary duct diameter and an ancillary duct outlet. The number of ancillary ducts further have a number of particle access openings, preferably connected to a number of exits in the reservoir. According to preferred embodiments, the primary gas duct and number of ancillary gas ducts are designed such that the gas flow ($m^3/s$) generated in the primary gas duct is larger than the gas flow ($m^3/s$) in the number of ancillary gas ducts, preferably in that the area of the cross section of the primary duct is larger than the area of the cross section of the number of ancillary ducts. Thus, according to these embodiments, the area of the cross section of the number of ancillary ducts preferably is smaller than the area of the cross section of the primary duct. The function, operation and suitable means that may serve as the number of ancillary gas ducts are already discussed in relation to the method according to the invention.

The device further comprises a number of gas displacers suitable for generating a number of forced gas flows in a number of blow directions, which number of forced gas flows are suitable to carry along the particles in the number of blow direction. The function, operation and suitable means that may serve as gas displacer are discussed in relation to the method according to the invention.

Furthermore, the device comprises means to direct the particles from the reservoir via the exits in the primary gas duct and a number of ancillary gas ducts. The function, operation and suitable means that may be used to direct the particles from the reservoir via the exits in the primary gas duct and a number of ancillary gas ducts, are discussed in relation to the method according to the invention.

The device of the invention may be a handheld device carried by an operator. According to alternative embodiments, the device according to the invention comprises means to actuate the device. The device herein may be actuated by making use of actuation means which are part of the device, or alternatively the device may be loaded on a different device having actuation means. In both alternatives it is possible to actuate the device over the ground or hanging on a transport system. These transport means in a different preferred embodiment are suitable to actuate the device along a rail system, having a number of rails, such as a monorail. Hereby the device according to the invention is actuated comparable to a spraying robot, used in greenhouse horticulture, for example for the production of chrysanthemum or Rosa species. According to a further preferred embodiment the actuation means are suitable to actuate the device in a direction having a directional component perpendicular to the direction of the forced gas flow.

The device according to certain embodiments may comprise a plurality, for example two, gas displacers, positioned such that they may generate the forced gas flows in different directions, preferably in opposite directions. According to certain embodiments the device further comprises a container for a fluid and means to nebulise the fluid, which means for nebulising the fluid are suitable to introduce the nebulised fluid in the forced gas flow.

A further aspect of the invention relates to the use of the particle distribution device according to the invention in the distribution of a particulate material in a target area, such as a crop. The features relevant for this aspect of the invention will be clear for the skilled person in view of the description of the method of the invention and of the device for performing the method.

The various other technical features of this aspect of the invention, will be clear for the skilled person in view of the above detailed description of the method of the invention and the particle distribution device of the invention.

The different aspects of the invention will now be discussed with reference to the figures and experimental examples which relate to exemplary embodiments of the invention.

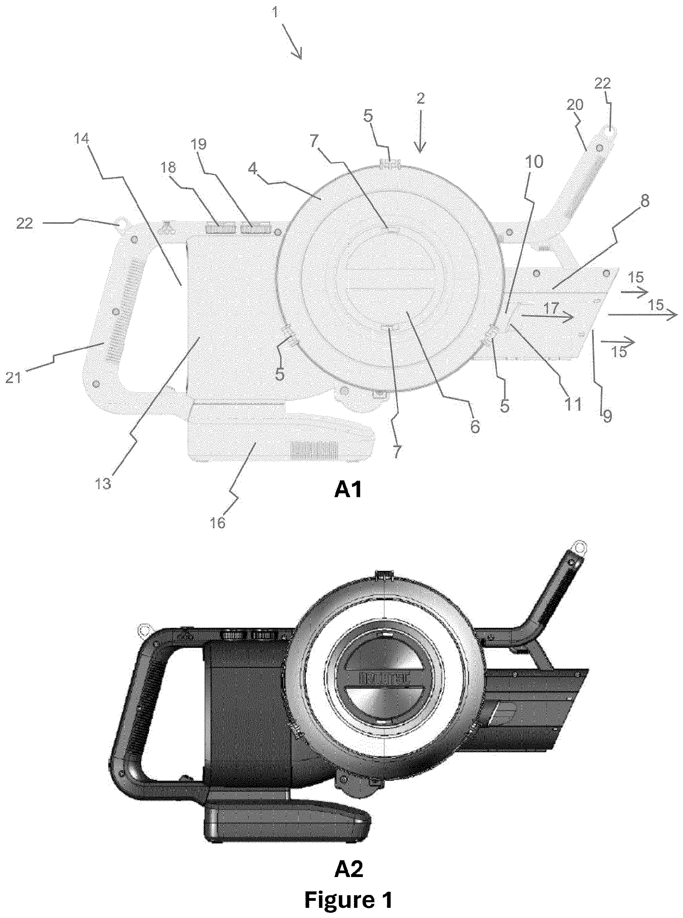

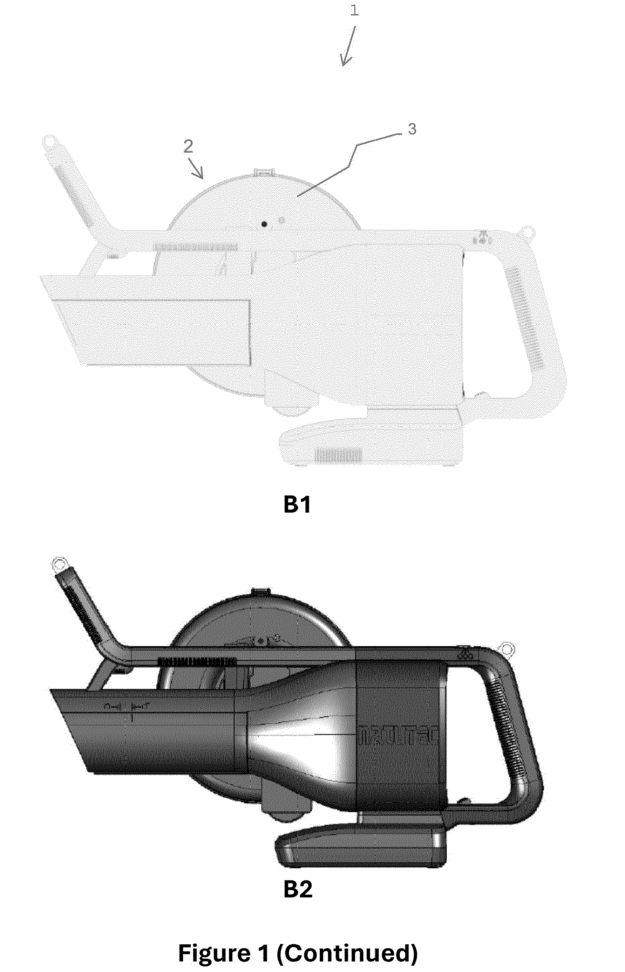

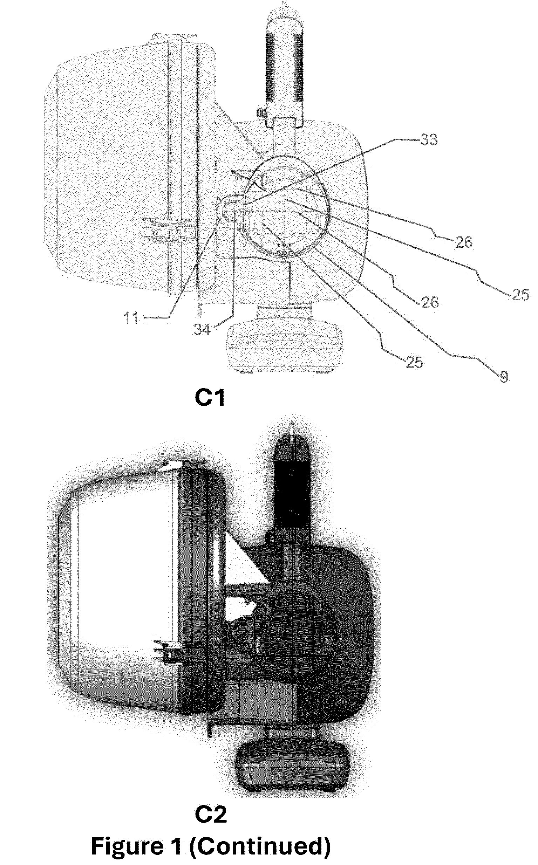

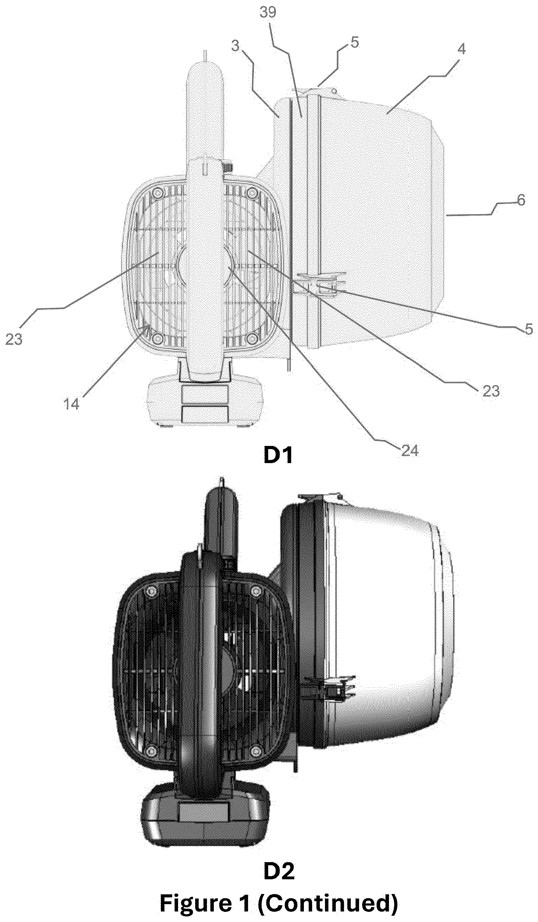

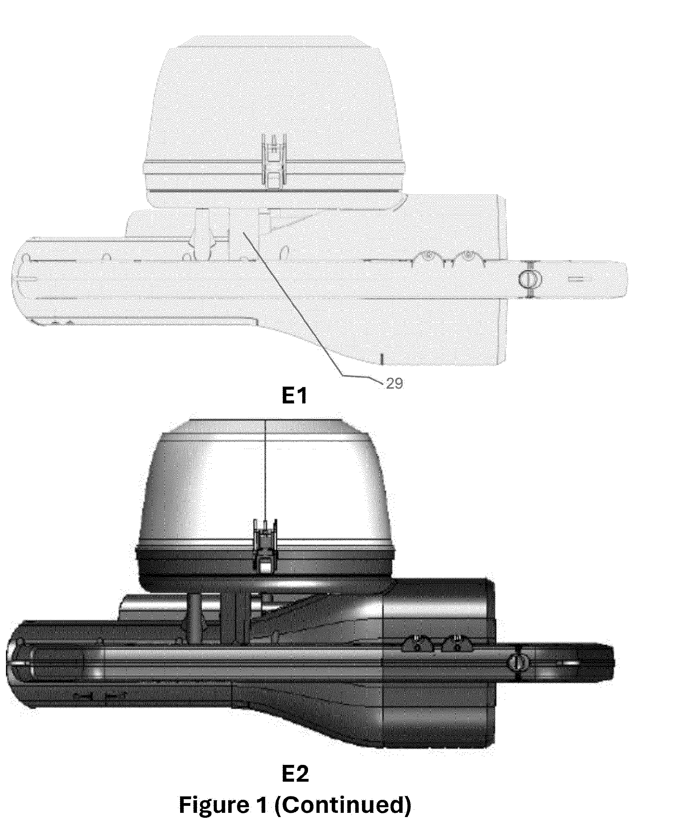

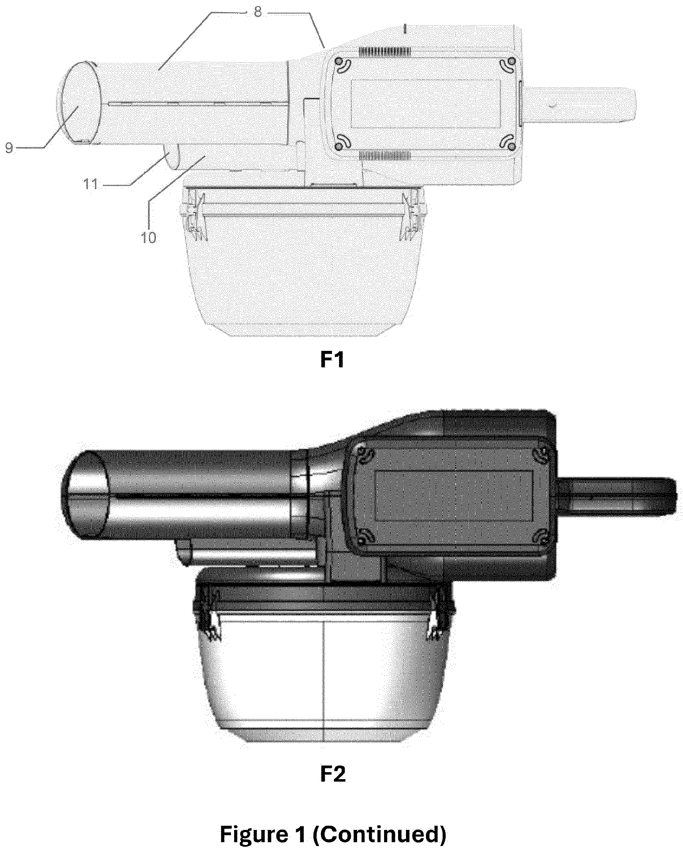

Figure 1 presents six different views (A-F) each in two different presentations, i.e. in wired frame presentation (presentations 1, e.g. A1) and in shaded presentation (presentations 2, e.g. A2) of an embodiment of a hand-held device (1) of the invention which is suitable for performing the method of the invention. The six views presented are the following: a right-hand side view (A), a left-hand side view (B), a front side view (C), a back view (D), a top view (E), a bottom view (F). In figure 1, refence numbers have only been added to the wire frame view, it will be clear that the indicated elements and functionalities could also be indicated in the shaded views. The use position of the device is presented in figures 1A, 1B, 1C, 1D.

The device (1) shown in figure 1 comprises a reservoir (2) suitable for holding a particulate material (and thus the particles therein). In the embodiment shown, the reservoir (2) has a circular base and a domed shape cover (4) which is attachable with tension closure buckles (5) to a rotation ring, rotating on a disc support (3). The domed shape cover (4) has a removable circular lid (6), which is securable with a rotating closure fixable with sliding locks (7). By opening the removable lid (6), particulate material can be loaded into the reservoir (2). The domed shape cover (4) may be removed by detaching the tension closure buckles (5).

The device further has a primary gas duct (8) having a primary gas duct outlet (9). The primary gas duct (8) has a particle access opening (30), which is not visible in the view of figure 1. The particle access opening (28) via a channel (29) is in connection with a particle exit opening (30) in the reservoir (2). The particle exit opening (30) and the channel (29) are not visible in the view of figure 1. The device (1) also comprises a single ancillary gas duct (10) having an ancillary gas duct outlet (11). The length of the ancillary gas duct (10) is shorter than the length of the primary gas duct (8), and the area of the cross-section of the ancillary duct (10) is smaller than the area of the cross-section of the primary gas duct (8). The ancillary gas duct (10) has a particle access opening (31), which is not visible in the view of figure 1. The particle access opening (31) via a channel (32) is in connection with a particle exit opening (30) in the reservoir (2). The particle exit opening (31) and the channel (32) also are not visible in the view of figure 1.

As a gas displacer the device (1) comprises a rotor (23), positioned in a rotor chamber (12) positioned in the rotor section (13) of the device. The rotor (23) is driven by an electromotor (24) obtaining the required electrical power from a battery pack (43) located in a battery pack housing (16) wired to the electromotor (24). In the views of figure 1 A-C and E-F, the rotor chamber (12), the rotor (23) and the electromotor (24) are not visible and only the exterior housing (13) of the rotor section where the rotor chamber is located is visible. The rear opening (the inlet) of the rotor chamber (12) and the back side of some of the blades of the rotor (23) and the electromotor (24), positioned behind safety bars, are visible in the view of figure 1D.

Driven by the electromotor (24), the rotor (23) is capable of generating a forced gas flow in the blow direction (going from the inlet (14) of the rotor chamber to the primary duct outlet (9). In figure 1, the arrows (15) schematically represent the forced gas flow exiting the outlet (9) of the primary gas duct (8) in the blow direction. Before exiting from the outlet (9) of the primary duct (8), the primary gas flow generated by the rotor is guided through a grid formed by a plurality of gas modification channels positioned in the primary gas duct. This grid of channels formed by 5 vertical plates (25) and 5 horizontal plates (26) is visible in the front view of figure (1C).

The forced gas flow (15) exiting from the outlet (9) of the primary duct (8) is suitable to carry along the particles of a particulate material in the blow direction over a distance of about 4,0 meter. The power of the electromotor (24) is adjustable via a control unit in the electrical circuit connected to controller (18). Creating a possibility to control the output of the electromotor and thus the power of the forced gas flow.

In its interior (not visible in the views of figure 1), the primary gas duct (8) has a gas diverting opening (27) via which the primary gas flow can enter a channel that leads to the ancillary gas duct (10). Thus, the ancillary gas flow is created in the ancillary gas duct (10) from the primary gas flow. The ancillary gas flow thus created exits the ancillary gas duct (10) at the ancillary duct outlet (11). The arrow (17) schematically represents the forced gas flow exiting the outlet (11) of the ancillary gas duct (10) in the blow direction (17). The forced gas flow (17) exiting from the outlet (11) of the ancillary duct (10) is suitable to carry along the particles of a particulate material in the blow direction over a distance of about 1,5 meter.

In the views of figure 1 it is further visible that the device has a front handle (20) and a rear handle (21) to support handheld operation of the device. Each of the handles (20) and (21) has an eye (22) allowing connection of a carrying (shoulder) band (not shown), to make prolonged handheld operation easier.

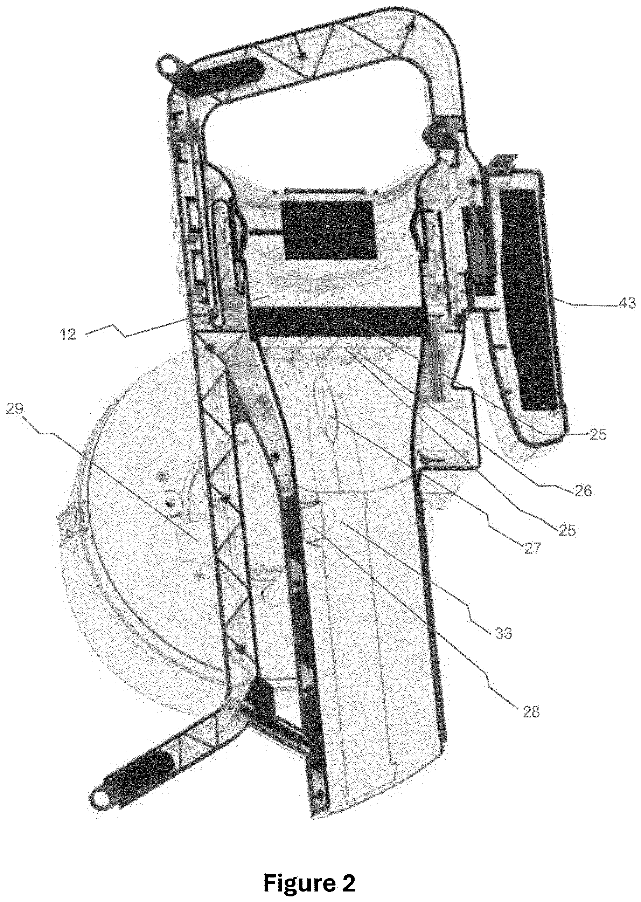

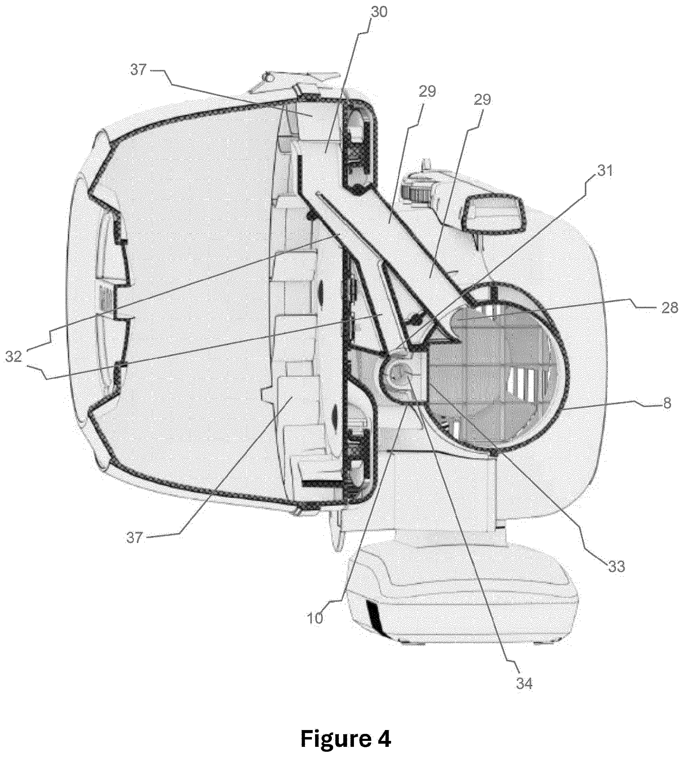

Figure 2 shows a cross section of the device of figures 1 along its longest axis. In this cross section the position of the grid formed by the horizontal plates (26) and vertical plates (25) is clearly visible. The grid (25, 26) is positioned just before the primary gas duct (8) narrows from the diameter at the rotor chamber to the diameter at the primary duct outlet (9). It is further visible that in the primary gas duct (8) a gas diverting opening (27) is present that takes in part of the gas flow flowing in the primary gas duct. The gas diverting opening (27) is connected to a channel that directs the diverted gas into the ancillary gas duct (see the discussion in connection to figure 4). Although not shown in the embodiment of figure 2, the amount of gas flowing into the gas diverting opening could be regulated by positioning a slidable plate (operable form the exterior of the primary gas duct) in or on the gas diverting opening (27). By this the area of the gas diverting opening (27) can be changed. Thus, the gas flow flowing into the ancillary duct (10) can be changed.

The cross section of figure 2 also shows the primary duct particle access opening (28) via which the particles enter the primary gas duct (8) and the gas flow flowing therein. The primary duct particle access opening (28) is connected to a primary duct particle channel (29) that guides the particles from the particle exit (30) in the reservoir (2) towards said primary duct particle access opening (28). This will be discussed in more detail in connection to figure 4.

In the cross section of figure 2 an insert (34) is shown that separates the primary duct (8) from the ancillary duct (10). In production of the device (1) of this embodiment, the primary duct (8) and the secondary duct (10) are manufactured as a single piece and the insert (34) is used to create two separate gas ducts (8, 10).

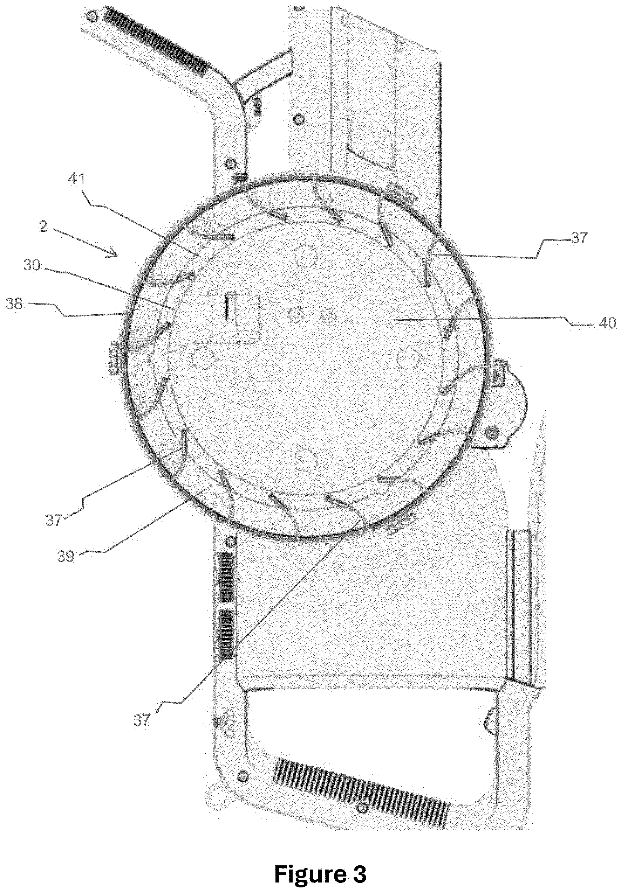

Figure 3 shows the interior of the reservoir (2) seen from the right-hand side. In this view the dome shaped cover (4) has been removed and bend plates (37), serving as scoops for the particles, positioned on a circular support (38) are visible. The circular support (38) with the bend scooping plates (37) is connected to a rotation ring (39) which is rotatable around the centre disc (40). For the increasing structural integrity of the scoops, they are connected to a rigidity ring (41). The centre disc (40) and rotation ring (39) are supported by the disc support (3). An electromotor (not visible) via gears drives the rotation ring (39) and thus also the bend scoops (37) positioned on the circular support (38) in clockwise direction. This allows mechanical transportation of the particles from the lower parts (in the use position) of the reservoir (2) to the reservoir exit (30) positioned at a higher part (in the use position) in the reservoir (2). The size and shape of the bend plates (37) and of the exit opening (30) are designed such that the particles are delivered to the exit opening (30). In the normal use, when the dome shaped cover (4) is attached to the rotation ring (39), the dome shaped cover will also rotate.

From the reservoir exit (30) the particles via channels (29, 32) are guided towards the particle access opening (28) of the primary gas duct (8) and the particle access opening (31) of the ancillary duct (10). The transportation of the particles through the channels (29, 32) is under the influence of gravity, but suction forces caused by the forced gas flow flowing in the primary duct (and also in the ancillary gas duct) may aid in this.

The cross section of figure 4 (perpendicular to the cross section of figure 2), shows how the mechanical transportation scooping plates (37) via the reservoir exit opening (30) and the channels (29, 32) connect to the particle access opening (28) of the primary duct (8) and the particle access opening (31) of the ancillary duct (10) and end up the primary gas flow and the ancillary gas flow.

At a constant rotation of the rotation ring (39), the mechanical transportation of the particles results in an essentially constant dosing of the particles into the particle access opening (28) of the primary duct (8) and the particle access opening (31) of the ancillary duct (10) and thus into the primary gas flow and the ancillary gas flow, because the scooping plates (37) at the essentially constant carrying position of the device (1) will transport a constant amount of particulate material. The constant carrying position is improved by the use of the shoulder strap connected to the eyes (22) on the handles (20, 21). The rotation of the rotation ring (39) may be varied by adjusting the number of rotations of the electromotor driving the rotation ring (39). For this the device (1) comprises a control unit connected to the electrical circuit of the electromotor which is connected to a rotation controller (19).

Because the rotation disc (39), the dome cover (4) and the scooping plates (37) rotate together shear forces in the reservoir (2) are reduced. This reduces the risk of damage to the particulate material. This is in particular relevant when the particulate material contains sensitive elements, such as living beneficial arthropods, such as living predatory mites or living prey mites.

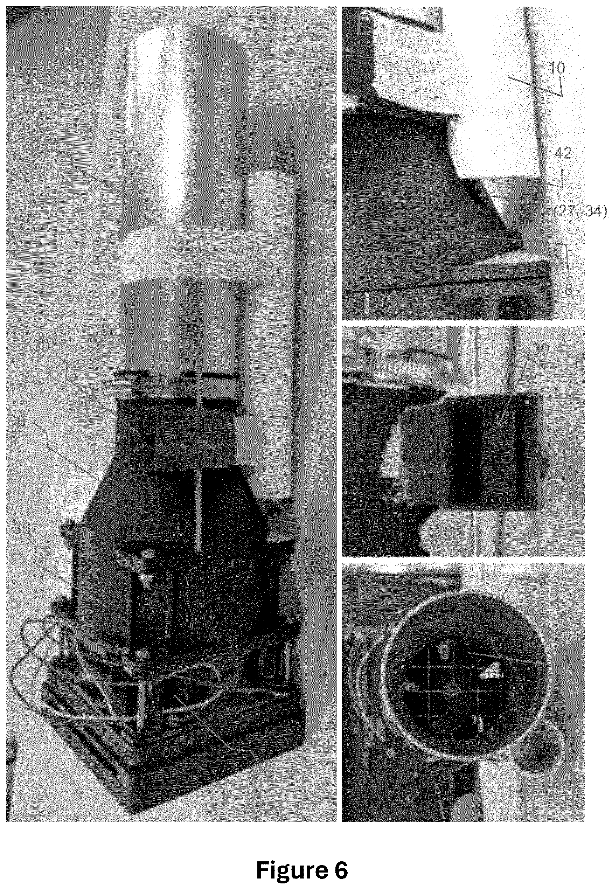

In the cross section of figure 4 the outlet (34) of the gas injection channel from which the gas flow diverted from the primary gas duct (8) (via the gas diversion opening (27)) is injected into the ancillary gas duct (10) is also visible. This gas injection channel, in particular its outlet (34), should be considered to be the gas displacer creating the forced gas flow in the ancillary gas duct (10). The outlet (34) of the gas injection channel relative to the particle access opening (31) of the ancillary duct (10) is located more towards the first end of the ancillary duct (10). As is visible, in this embodiment the area of the cross section of the gas injection channel (34) is smaller than the area of the cross section of the ancillary gas duct (10). The ancillary duct (10) is open at the first end and between the walls of the ancillary duct (10) and the gas injection channel (34) an open space is created that allows exterior air to the enter under the suction force of the forced gas flow flowing in the ancillary duct (10). The suction of this external air will decrease the volumetric flow of the ancillary gas flow, thus changing its distribution of particles carried therein. This configuration of the ancillary duct (10) at its first end (42) and the gas injection channel outlet (34) is not clearly visible in figure 4, but as it was part of early developments, a comparable setup is visible in the prototype of figure 6 (see figure 6D). Relative to the situation of figure 6, in the embodiment of figures 1-4, the gas injection channel outlet (34) is located more into the interior of the ancillary gas duct (10).

**Experiments**

Experiment 1

Setup

In this experiment the distribution of particulate material when using the method of the invention executed in a device of the invention was tested. The device in this test was a test assembly prototype predecessor (see figure 6) of the device shown in figures 1-4. In the test two setups of the device were tested (I) according to the invention comprising both a primary gas duct (8) and an ancillary gas duct (10) receiving part of the gas flow from the primary gas duct (10) and (II) for comparison the ancillary gas duct (8) was removed. In the prototype of the test (see figure 6) the gas diversion opening (27) in the primary duct (10) directly provided the gas flow in the ancillary gas duct (8). Thus, there was no gas injection channel and the gas diversion opening (27) could be considered to coincide with the gas injection outlet (34). When the ancillary gas duct (8) was removed, the gas diversion opening (27) in the primary gas duct (10) was closed with tape. The electromotor of the fan gas displacer (EBM Papst NH4) of the device was delivered with a precalibrated voltage to deliver a maximal distribution of about 4 meter in the test. This distance of 4 meter is a preferred distance for distribution in many greenhouses.

For the experiment the device was positioned on a work bench with the outlets of the primary duct and of the ancillary duct overhanging the edge of the work bench. The hight of the central axis of the primary duct was about 100 cm above the floor surface, which corresponds roughly with its hight in operation (when carried by a person of average length).

As a model for particulate materials in this experiment moistened saw dust having an average particle size of 0.75 mm and a density of about 194 g/l was used. This particulate material was loaded manually into the particle exit opening (30).

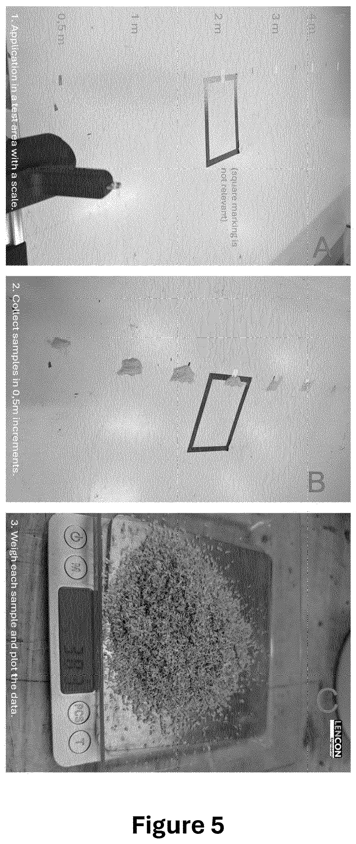

On the floor in front of the table, measuring lines where positioned every 0,25 metres from 0-4 metre. The lines representing full metres contained indicators for the distance (comparable to figures 5A and 5B). The outlet of the main duct was positioned aligned with the 0-meter line.

The fan of the device was activated and when the gas flow was in a steady state, an amount of particulate material was loaded by hand in the opening (30) that conceptually functions as reservoir exit (30) for the particulate material. Via two channels (29, 32) connected to the exit (30) the particulate material reaches the primary duct access opening (28) and the ancillary duct access opening (31) which provide access to the primary gas duct (8) and the ancillary duct gas duct (10). When the ancillary duct is removed the part of the particulate material that would move to the ancillary duct (10) is simply spilled.

The material distributed on the floor is then collected per 0,25 meter segment and weighed on a scale (comparable to figure 5C) and the data is entered in a spreadsheet program to calculate the distribution percentage per interval and for graphic presentation of the results.

Results and discussion

Table I below for the two treatments (I) and (II) shows the absolute and normalized amounts of the particles distributed per segment. The normalized data of table I are visually presented in figure 7.

Table I

| Distance | Primary duct +Ancillary duct | | Primary duct only | |
|---|---|---|---|---|
| | Absolute | Normalised | Absolute | Normalised |
| [cm] | [g] | (%) | [g] | (%) |
| 25 | 1,18 | 2,1 | 0 | 0,0 |
| 50 | 4,07 | 7,3 | 0 | 0,0 |
| 75 | 5,42 | 9,7 | 0,3 | 0,5 |
| 100 | 5,46 | 9,7 | 0,9 | 1,6 |
| 125 | 3,31 | 5,9 | 1,64 | 3,0 |
| 150 | 3,41 | 6,1 | 3,23 | 5,8 |
| 175 | 3,04 | 5,4 | 4,11 | 7,4 |
| 200 | 4,6 | 8,2 | 6,23 | 11,2 |
| 225 | 4,3 | 7,7 | 6,41 | 11,6 |
| 250 | 5 | 8,9 | 6,64 | 12,0 |
| 275 | 4,85 | 8,7 | 8,01 | 14,5 |
| 300 | 5,82 | 10,4 | 8,25 | 14,9 |
| 325 | 3,05 | 5,4 | 5,22 | 9,4 |
| 350 | 1,65 | 2,9 | 3,29 | 5,9 |
| 375 | 0,72 | 1,3 | 0,98 | 1,8 |

(continued)

| | Primary duct +Ancillary duct | | Primary duct only | |
|---|---|---|---|---|
| Distance | Absolute | Normalised | Absolute | Normalised |
| [cm] | [g] | (%) | [g] | (%) |
| 400 | 0,18 | 0,3 | 0,2 | 0,4 |
| | Total | Total | Total | Total |
| | 56,06 | 100 | 55,41 | 100 |

The data shows that by using the method of the invention the distribution pattern is more even across the 16 segments. It should be realized that a decrease in the absolute (and normalized) distribution of particles in the furthest segments is unpreventable. For these furthest distribution segments, the use of the combination of a primary duct and an ancillary duct results in a particle distribution that is at least as good as using only a primary gas duct.

Experiment 2

Setup

In this experiment the distribution of the further developed embodiment of the device of figures 1-4 was measured. Moistened saw dust (particle size about 0.75 mm and density 184 g/l) was used for the distribution.
The distribution of the particles was measured with a methodology comparable to what is described in Experiment 1. The particles were collected and weighed from 8 regularly distanced sections between 0 and 400 cm. For this the particulate material was loaded in the reservoir of the device and after the device was placed in position, the electromotor driving the fan was activated and after a steady state gas flow had developed the transport of particulate material towards the gas ducts was activated.

Results and discussion

Table II below for the two shows the absolute and normalized amounts of the sawdust particles distributed per segment together with the deviation from the theoretical ideal.
The results obtained for the further developed embodiment of this experiment are comparable to what was obtained for the early development prototype of experiment 1. For alternative particulate materials, such as those mentioned in WO2018/147733, e.g. wheat bran, vermiculite, or chaff, such as chaff selected from rice husks or millet husks, the method and device of this invention will also be suitable.

Table II

| Sawdust | | |
|---|---|---|
| Distance | Absolute | Normalised |
| [cm] | [g] | [%] |
| 50 | 10,2 | 13,2 |
| 100 | 10 | 13,0 |
| 150 | 10,3 | 13,3 |
| 200 | 14,1 | 18,3 |
| 250 | 13 | 16,8 |
| 300 | 12,7 | 16,5 |
| 350 | 6 | 7,8 |
| 400 | 0,9 | 1,2 |
| | Total | Total |
| | 77,21 | 100 |

**Claims**

1.  Method for distributing particulate material comprising:

    (i) providing in a reservoir (2) particulate material comprising particles to be distributed in a target area, which reservoir (2) is provided with a number of exits (30) for the particles, wherein the particulate material preferably is selected as a composition comprising beneficial arthropods;
    (ii) providing a primary gas duct (8) having a first end, a second end (9) and a hollow body connecting the first end and the second end (9), wherein the primary duct (8) body has a cross section, having an area, and a number of particle access openings (28), preferably connected to a number of exits (30) in the reservoir (2);
    (iii) providing a number of ancillary gas ducts (10) each having a first end, a second end (11) and a hollow body connecting the first end, and the second end (11), wherein each ancillary duct (10) body has a cross section having an area, wherein preferably the area of the cross section of the number of ancillary ducts (10) is smaller than the area of the cross section of the primary duct (8) and, wherein a number of ancillary ducts (10) further have a number of particle access openings (31), preferably connected to a number of exits (30) in the reservoir (2);
    (iv) providing a number of gas displacers (23) suitable for generating a forced gas flow in a blow direction;
    (v) generating with a number of gas displacers (23) a forced gas flow flowing in the primary gas duct (8) from the first end to the second end (9) and a forced gas flow flowing in a number of ancillary gas ducts (10) flowing from the first end to the second end (11), wherein, the gas velocity in m/s in the primary gas duct is higher than the gas velocity in m/s in the number of ancillary gas ducts such that the volumetric gas flow in $m^3/s$ in the primary gas duct is higher than the volumetric gas flow in $m^3/s$ in the number of ancillary gas ducts;
    (vi) directing the particles from the number of exits (30) via a number of particle access openings (28, 31) in the forced gas flows flowing in the primary gas duct (8) and in a number of ancillary gas ducts (10), such that the particles are carried along in the blow direction and exit the primary gas duct (8) at its second end (9) and the number of ancillary ducts (10) at the number second ends (11) of number of ancillary gas ducts (10).

2.  Method according to claim 1, wherein the primary duct (8) and a number of ancillary ducts (10) are designed such that the primary gas flow (15) and the number of ancillary gas flows (17) have an at least substantially parallel directions and preferably have parallel directions.

3.  Method according to any of the preceding claims, wherein the length of a number of ancillary ducts (10) differs from the length of the primary duct (8), wherein preferably the length of a number of ancillary ducts (10) is shorter than the length of the primary duct (8).

4.  Method according to any of the preceding claims, wherein in the primary gas duct (8) a plurality of channels is provided, each channel comprising an inlet, an outlet and a hollow body connecting the inlet and outlet, wherein the inlets are designed such that at least a part of the forced gas flow flows through the channels and the outlets are designed to direct the gas outflows in substantially the same direction, wherein preferably the channels are positioned in the forced gas flow in an at least substantially parallel position.

5.  Method according to any of the previous claims, wherein the forced gas flow in the primary duct (8) has a power adjusted to blow the particles over an axial distance of at most about 0,5-8 metre, preferably about 3-6 metres, more preferably about 4-6 metres, most preferably about 5 metres.

6.  Method according to any of the previous claims, wherein the forced gas flow exits the primary duct outlet (9) and the number of outlets (11) of the number of ancillary gas ducts (10) at an elevated point, such as above, relative to the target area, such as a cropping area or a stable floor, wherein preferably the primary duct outlet (9) and the number of outlets (11) of the number of ancillary ducts (10) are moved at the elevated position relative to the target area in a direction having a directional component perpendicular to the direction of the primary gas flow.

7.  Method according to any of the previous claims, wherein the primary gas duct (8) comprises a gas diversion opening (27), preferably connected to a gas diversion channel, for diverting part of the primary gas flow into an ancillary gas duct (10), thus creating an ancillary gas flow.

8.  Method according to any of the previous claims, wherein means are provided to change the gas velocity of the forced gas flow in the number of ancillary ducts (10), such as means to reduce the gas velocity of an ancillary gas flow, such as openings in the body of an ancillary duct (10) in connection with the external air, or means to increase the gas velocity, such as means to decrease the area of the cross section of an ancillary duct (10) body, in particular at the outlet (11).

9. Device (1) for distributing particulate material comprising particles, said device (1) comprising:

(A) a reservoir (2) suitable for holding the particles, which reservoir is provided with a number of exits (30) for the particles;

(B) a primary gas duct (8) having a first end, a second end (9) and a hollow body connecting the first end and the second end (9), wherein the primary duct (8) body has a cross section, having an area, and a number of particle access openings (28), preferably connected to a number of exits (30) in the reservoir (2);

(C) a number of ancillary gas ducts (10) each having a first end, a second end (11) and a hollow body connecting the first end and the second end (11), wherein each ancillary duct (10) body has a cross section having an area, wherein preferably the area of the cross section of the number of ancillary ducts (10) is smaller than the area of the cross section of the primary duct (8) and, wherein a number of ancillary ducts (10) further have a number of particle access openings (31), preferably connected to a number of exits (30) in the reservoir (2);

(D) a number of gas displacers (23) suitable for generating a number of forced gas flows in the primary gas duct (8) and in the number of ancillary gas ducts (10), which number of forced gas flows have a blow direction and are suitable to carry along the particles in their blow direction;

(E) means for directing the particles from a number of exits (30) via the particle access openings (28, 31) in the primary gas duct (8) and a number of ancillary gas ducts (10);

wherein the primary gas duct (8), and/or the number of ancillary gas ducts (10) and/or the number of gas displacers (23) are designed such that the gas velocity in m/s in the primary gas duct is higher than the gas velocity in m/s in the number of ancillary ducts such that the volumetric gas flow in $m^3/s$ generated in the primary gas duct is larger than the volumetric gas flow in $m^3/s$ in the number of ancillary gas ducts.

10. Device (1) according to claim 9, wherein the primary duct (8) and a number of ancillary ducts (10) have an at least substantially parallel direction and wherein preferably the length of a number of ancillary ducts (10) differs from the length of the primary duct (8).

11. Device (1) according to any of the claims 9-10, wherein in the primary duct (8) a plurality of channels is provided, each channel comprising an inlet, an outlet and a hollow body connecting the inlet and outlet, wherein the inlets are designed such that at least a part of the forced gas flow flows through the channels and the outlets are designed to direct the gas outflows in substantially the same direction.

12. Device (1) according to any of the claims 9-11, wherein the forced gas flow in the primary ducts (8) has a power adjusted to blow the particles over an axial distance of at most about 0,5-8 metres, preferably about 3-6 metres, more preferably about 4-6 metres, most preferably about 5 metres.

13. Device (1) according to any of the claims 9-12, comprising means (27) to direct the forced gas flow generated in the primary gas duct (1) into a number of ancillary gas ducts (10), and preferably further comprising means to reduce the gas velocity of the forced gas flow in an ancillary duct (10).

14. Device (1) according to any of the claims 9-13, wherein the primary duct (8) and number of ancillary gas ducts (10) are designed such that the gas flow ($m^3/s$) generated in the primary gas duct (8) is larger than the gas flow ($m^3/s$) in the number of ancillary gas ducts (10) in that the area of the cross section of the primary duct (8) is larger than the area of the cross section of the number of ancillary ducts (10).

15. Use of a device (1) according to any of the claims 9-14 in the distribution of a particulate material comprising particles in a target area, such as in a crop, wherein preferably the particulate material is selected as a composition comprising beneficial arthropods, more preferably beneficial mites, such as predatory mites or Astigmatid prey mites, most preferably beneficial arthropods comprising adult life stages.

**Patentansprüche**

1. Verfahren zur Verteilung von partikelförmigem Material, umfassend:

(i) Bereitstellen von partikelförmigem Material in einem Behälter (2), wobei das partikelförmige Material Partikel umfasst, die in einem Zielbereich verteilt werden sollen, wobei der Behälter (2) mit einer Anzahl von Auslässen (30) für die Partikel bereitgestellt ist, wobei das partikelförmige Material bevorzugt als eine Zusammensetzung ausgewählt ist, die nützliche Arthropoden umfasst;

(ii) Bereitstellen eines primären Gaskanals (8), der ein erstes Ende, ein zweites Ende (9) sowie einen Hohlkörper aufweist, der das erste Ende mit dem zweiten Ende (9) verbindet, wobei der Körper des primären Gaskanals (8) einen Querschnitt mit einer Fläche sowie eine Anzahl von Partikelzugangsöffnungen (28) aufweist, die vorzugsweise mit einer Anzahl von Auslässen (30) in dem Behälter (2) verbunden sind;

(iii) Bereitstellen einer Anzahl von zusätzlichen Gaskanälen (10), die jeweils ein erstes Ende, ein zweites Ende (11) sowie einen Hohlkörper aufweisen, der das erste Ende mit dem zweiten Ende (11) verbindet, wobei der Körper jedes zusätzlichen Gaskanals (10) einen Querschnitt mit einer Fläche aufweist, wobei vorzugsweise die Fläche des Querschnitts der Anzahl von zusätzlichen Gaskanälen (10) kleiner ist als die Fläche des Querschnitts des primären Gaskanals (8), und wobei eine Anzahl von zusätzlichen Gaskanälen (10) ferner eine Anzahl von Partikelzugangsöffnungen (31) aufweist, die vorzugsweise mit einer Anzahl von Auslässen (30) in dem Behälter (2) verbunden sind;

(iv) Bereitstellen einer Anzahl von Gasverdrängern (23), die zum Erzeugen eines erzwungenen Gasstroms in einer Blasrichtung geeignet sind;

(v) Erzeugen mit einer Anzahl von Gasverdrängern (23) eines erzwungenen Gasstroms, der in dem primären Gaskanal (8) von dem ersten Ende zu dem zweiten Ende (9) strömt, und eines erzwungenen Gasstroms, der in einer Anzahl von zusätzlichen Gaskanälen (10) von dem ersten Ende zu dem zweiten Ende (11) strömt, wobei die Gasgeschwindigkeit in m/s in dem primären Gaskanal höher ist als die Gasgeschwindigkeit in m/s in der Anzahl von zusätzlichen Gaskanälen, sodass der volumetrische Gasstrom in $m^3$/s in dem primären Gaskanal höher ist als der volumetrische Gasstrom in $m^3$/s in der Anzahl von zusätzlichen Gaskanälen;

(vi) Leiten der Partikel von der Anzahl von Auslässen (30) über eine Anzahl von Partikelzugangsöffnungen (28, 31) in die erzwungenen Gasströme, die in dem primären Gaskanal (8) und in einer Anzahl von zusätzlichen Gaskanälen (10) strömen, sodass die Partikel in der Blasrichtung mitgeführt werden und den primären Gaskanal (8) an dessen zweitem Ende (9) sowie die Anzahl von zusätzlichen Gaskanälen (10) an der Anzahl zweiter Enden (11) der Anzahl von zusätzlichen Gaskanälen (10) verlassen.

2. Verfahren nach Anspruch 1, wobei der primäre Kanal (8) und eine Anzahl von zusätzlichen Kanälen (10) so ausgelegt sind, dass der primäre Gasstrom (15) und die Anzahl von zusätzlichen Gasströmen (17) zumindest im Wesentlichen parallele Richtungen aufweisen und vorzugsweise parallele Richtungen aufweisen.

3. Verfahren nach einem der vorstehenden Ansprüche, wobei sich die Länge einer Anzahl von zusätzlichen Kanälen (10) von der Länge des primären Kanals (8) unterscheidet, wobei die Länge einer Anzahl von zusätzlichen Kanälen (10) vorzugsweise kürzer ist als die Länge des primären Kanals (8).

4. Verfahren nach einem der vorstehenden Ansprüche, wobei in dem primären Gaskanal (8) eine Vielzahl von Kanälen bereitgestellt ist, wobei jeder Kanal einen Einlass, einen Auslass und einen den Einlass und den Auslass verbindenden Hohlkörper umfasst, wobei die Einlässe so ausgelegt sind, dass zumindest ein Teil des erzwungenen Gasstroms durch die Kanäle strömt, und die Auslässe so ausgelegt sind, dass sie die Gasströme im Wesentlichen in die gleiche Richtung lenken, wobei vorzugsweise die Kanäle in dem erzwungenen Gasstrom in einer zumindest im Wesentlichen parallelen Position angeordnet sind.

5. Verfahren nach einem der vorstehenden Ansprüche, wobei der erzwungene Gasstrom in dem primären Kanal (8) eine Leistung aufweist, die zum Blasen der Partikel über eine axiale Strecke von höchstens etwa 0,5-8 Meter ausgelegt ist, vorzugsweise etwa 3-6 Meter, besonders bevorzugt etwa 4-6 Meter und am meisten bevorzugt etwa 5 Meter.

6. Verfahren nach einem der vorstehenden Ansprüche, wobei der erzwungene Gasstrom den primären Kanalauslass (9) und die Anzahl von Auslässen (11) der Anzahl von zusätzlichen Gaskanälen (10) an einem erhöhten Punkt, wie etwa oberhalb, relativ zu dem Zielbereich, wie beispielsweise eine Anbaufläche oder einen Stallboden verlässt, wobei vorzugsweise der primäre Kanalauslass (9) und die Anzahl von Auslässen (11) der Anzahl von zusätzlichen Kanälen (10) an der erhöhten Position relativ zu dem Zielbereich in einer Richtung bewegt werden, die eine Richtungskomponente senkrecht zu der Richtung des primären Gasstroms aufweist.

7. Verfahren nach einem der vorstehenden Ansprüche, wobei der primäre Gaskanal (8) eine Gasumleitungsöffnung (27) umfasst, die vorzugsweise mit einem Gasumleitungskanal verbunden ist, um einen Teil des primären Gasstroms in einen zusätzlichen Gaskanal (10) umzuleiten und so einen zusätzlichen Gasstrom zu erzeugen.

8. Verfahren nach einem der vorstehenden Ansprüche, wobei Mittel bereitgestellt sind, um die Gasgeschwindigkeit des erzwungenen Gasstroms in der Anzahl von zusätzlichen Kanälen (10) zu verändern, wie etwa Mittel zum Reduzieren der Gasgeschwindigkeit eines zusätzlichen Gasstroms, wie etwa Öffnungen in dem Körper eines zusätzlichen Kanals (10) in Verbindung mit der Außenluft, oder Mittel zum Erhöhen der Gasgeschwindigkeit, wie etwa Mittel zum Verringern der Querschnittsfläche des Körpers eines zusätzlichen Kanals (10), insbesondere an dem Auslass (11).

9. Vorrichtung (1) zur Verteilung von partikelförmigem Material, das Partikel umfasst, wobei die Vorrichtung (1) Folgendes umfasst:

(A) einen Behälter (2), der zum Aufnehmen der Partikel geeignet ist, wobei der Behälter mit einer Anzahl von Auslässen (30) für die Partikel bereitgestellt ist;
(B) ein primärer Gaskanal (8), der ein erstes Ende, ein zweites Ende (9) sowie einen Hohlkörper aufweist, der das erste Ende mit dem zweiten Ende (9) verbindet, wobei der Körper des primären Gaskanals (8) einen Querschnitt mit einer Fläche sowie eine Anzahl von Partikelzugangsöffnungen (28) aufweist, die vorzugsweise mit einer Anzahl von Auslässen (30) in dem Behälter (2) verbunden sind;
(C) eine Anzahl von zusätzlichen Gaskanälen (10), die jeweils ein erstes Ende, ein zweites Ende (11) sowie einen Hohlkörper aufweisen, der das erste Ende mit dem zweiten Ende (11) verbindet, wobei der Körper jedes zusätzlichen Gaskanals (10) einen Querschnitt mit einer Fläche aufweist, wobei vorzugsweise die Fläche des Querschnitts der Anzahl von zusätzlichen Gaskanälen (10) kleiner ist als die Fläche des Querschnitts des primären Gaskanals (8), und wobei eine Anzahl von zusätzlichen Gaskanälen (10) ferner eine Anzahl von Partikelzugangsöffnungen (31) aufweist, die vorzugsweise mit einer Anzahl von Auslässen (30) in dem Behälter (2) verbunden sind;
(D) eine Anzahl von Gasverdrängern (23), die zum Erzeugen einer Anzahl von erzwungenen Gasströmen in dem primären Gaskanal (8) und in der Anzahl von zusätzlichen Gaskanälen (10) geeignet sind, wobei die Anzahl von erzwungenen Gasströmen eine Blasrichtung aufweist und geeignet ist, die Partikel in ihrer Blasrichtung mitzuführen;
(E) Mittel zum Leiten der Partikel von einer Anzahl von Auslässen (30) über die Partikelzugangsöffnungen (28, 31) in den primären Gaskanal (8) und eine Anzahl von zusätzlichen Gaskanälen (10);

wobei der primäre Gaskanal (8) und/oder die Anzahl von zusätzlichen Gaskanälen (10) und/oder die Anzahl von Gasverdrängern (23) so ausgelegt sind, dass die Gasgeschwindigkeit in m/s in dem primären Gaskanal höher ist als die Gasgeschwindigkeit in m/s in der Anzahl von zusätzlichen Kanälen, sodass der in dem primären Gaskanal erzeugte volumetrische Gasstrom in $m^3$/s höher ist als der volumetrische Gasstrom in $m^3$/s in der Anzahl von zusätzlichen Gaskanälen.

10. Vorrichtung (1) nach Anspruch 9, wobei der primäre Kanal (8) und eine Anzahl von zusätzlichen Kanälen (10) eine zumindest im Wesentlichen parallele Richtung aufweisen und wobei sich vorzugsweise die Länge einer Anzahl von zusätzlichen Kanälen (10) von der Länge des primären Kanals (8) unterscheidet.

11. Vorrichtung (1) nach einem der Ansprüche 9 bis 10, wobei in dem primären Kanal (8) eine Vielzahl von Kanälen bereitgestellt ist, wobei jeder Kanal einen Einlass, einen Auslass und einen den Einlass und den Auslass verbindenden Hohlkörper umfasst, wobei die Einlässe so ausgelegt sind, dass zumindest ein Teil des erzwungenen Gasstroms durch die Kanäle strömt, und die Auslässe so ausgelegt sind, dass sie die Gasströme im Wesentlichen in die gleiche Richtung lenken.

12. Vorrichtung (1) nach einem der Ansprüche 9 bis 11, wobei der erzwungene Gasstrom in den primären Kanälen (8) eine Leistung aufweist, die zum Blasen der Partikel über eine axiale Strecke von höchstens etwa 0,5-8 Meter ausgelegt ist, vorzugsweise etwa 3-6 Meter, besonders bevorzugt etwa 4-6 Meter und am meisten bevorzugt etwa 5 Meter.

13. Vorrichtung (1) nach einem der Ansprüche 9 bis 12, umfassend Mittel (27) zum Lenken des im primären Gaskanal (1) erzeugten erzwungenen Gasstroms in eine Anzahl von zusätzlichen Gaskanälen (10) und vorzugsweise ferner umfassend Mittel zum Reduzieren der Gasgeschwindigkeit des erzwungenen Gasstroms in einem zusätzlichen Kanal (10).

14. Vorrichtung (1) nach einem der Ansprüche 9 bis 13, wobei der primäre Kanal (8) und die Anzahl von zusätzlichen Gaskanälen (10) so ausgelegt sind, dass der in dem primären Gaskanal (8) erzeugte Gasstrom ($m^3$/s) größer ist als der Gasstrom ($m^3$/s) in der Anzahl von zusätzlichen Gaskanälen (10), dadurch, dass die Querschnittsfläche des primären Kanals (8) größer ist als die Querschnittsfläche der Anzahl von zusätzlichen Kanälen (10).

**15.** Verwendung einer Vorrichtung (1) nach einem der Ansprüche 9 bis 14 zur Verteilung eines partikelförmigen Materials, das Partikel umfasst, in einem Zielbereich, wie etwa in Kulturpflanzen, wobei vorzugsweise das partikelförmige Material als eine Zusammensetzung ausgewählt ist, umfassend nützliche Arthropoden, besonders bevorzugt nützliche Milben, wie Raubmilben oder Astigmatid-Beutemilben, und am meisten bevorzugt nützliche Arthropoden umfassend adulte Entwicklungsstadien.

**Revendications**

**1.** Procédé de distribution d'une matière particulaire comprenant :

(i) la fourniture, dans un réservoir (2), d'une matière particulaire comprenant des particules à distribuer dans une zone cible, lequel réservoir (2) étant pourvu d'un certain nombre de sorties (30) pour les particules, la matière particulaire étant de préférence choisie comme une composition comprenant des arthropodes utiles ;

(ii) la fourniture d'un conduit de gaz primaire (8) comportant une première extrémité, une seconde extrémité (9) et un corps creux reliant la première extrémité et la seconde extrémité (9), dans lequel le corps du conduit primaire (8) présente une section transversale, présentant une surface, et un certain nombre d'ouvertures d'accès de particules (28), de préférence reliées à un certain nombre de sorties (30) dans le réservoir (2) ;

(iii) la fourniture d'un certain nombre de conduits de gaz auxiliaires (10) comportant chacun une première extrémité, une seconde extrémité (11) et un corps creux reliant la première extrémité et la seconde extrémité (11), dans lequel chaque corps de conduit auxiliaire (10) présente une section transversale présentant une surface, où, de préférence, la surface de la section transversale du certain nombre de conduits auxiliaires (10) est inférieure à la surface de la section transversale du conduit primaire (8) et, où un certain nombre de conduits auxiliaires (10) présentent en outre un certain nombre d'ouvertures d'accès de particules (31), de préférence reliées à un certain nombre de sorties (30) dans le réservoir (2) ;

(iv) la fourniture d'un certain nombre de dispositifs de déplacement de gaz (23) appropriés pour générer un flux de gaz forcé dans une direction de soufflage ;

(v) la génération, avec un certain nombre de dispositifs de déplacement de gaz (23), d'un flux de gaz forcé circulant dans le conduit de gaz primaire (8) depuis la première extrémité jusqu'à la seconde extrémité (9) et d'un flux de gaz forcé circulant dans un certain nombre de conduits de gaz auxiliaires (10) circulant depuis la première extrémité jusqu'à la seconde extrémité (11), dans lequel, la vitesse du gaz en m/s dans le conduit de gaz primaire est supérieure à la vitesse du gaz en m/s dans le certain nombre de conduits de gaz auxiliaires, de sorte que le débit de gaz volumétrique en $m^3$/s dans le conduit de gaz primaire est supérieur au débit de gaz volumétrique en $m^3$/s dans le certain nombre de conduits de gaz auxiliaires ;

(vi) le fait de diriger les particules à partir du certain nombre de sorties (30) par le biais d'un certain nombre d'ouvertures d'accès aux particules (28, 31) dans les flux de gaz forcés circulant dans le conduit de gaz primaire (8) et dans un certain nombre de conduits de gaz auxiliaires (10), de sorte que les particules soient transportées dans la direction de soufflage et sortent du conduit de gaz primaire (8) au niveau de sa seconde extrémité (9) et du certain nombre de conduits auxiliaires (10) au niveau des secondes extrémités (11) du certain nombre de conduits de gaz auxiliaires (10).

**2.** Procédé selon la revendication 1, dans lequel le conduit primaire (8) et un certain nombre de conduits auxiliaires (10) sont conçus de manière à ce que le flux de gaz primaire (15) et le certain nombre de flux de gaz auxiliaires (17) aient des directions au moins sensiblement parallèles et, de préférence, des directions parallèles.

**3.** Procédé selon l'une quelconque des revendications précédentes, dans lequel la longueur d'un certain nombre de conduits auxiliaires (10) diffère de la longueur du conduit primaire (8), la longueur d'un certain nombre de conduits auxiliaires (10) étant de préférence plus courte que la longueur du conduit primaire (8).

**4.** Procédé selon l'une quelconque des revendications précédentes, dans lequel, dans le conduit de gaz primaire (8), est prévue une pluralité de canaux, chaque canal comprenant une entrée, une sortie et un corps creux reliant l'entrée et la sortie, les entrées étant conçues de manière à ce qu'au moins une partie du flux de gaz forcé circule à travers les canaux et les sorties étant conçues pour diriger les flux de sortie de gaz dans une direction sensiblement identique, les canaux étant de préférence positionnés dans le flux de gaz forcé dans une position au moins sensiblement parallèle.

**5.** Procédé selon l'une quelconque des revendications précédentes, dans lequel le flux de gaz forcé dans le conduit primaire (8) présente une puissance réglée pour souffler les particules sur une distance axiale maximale d'environ 0,5 à 8 mètres, de préférence d'environ 3 à 6 mètres, plus préférablement d'environ 4 à 6 mètres, de manière davantage préférée d'environ 5 mètres.

6. Procédé selon l'une quelconque des revendications précédentes, dans lequel le flux de gaz forcé sort de la sortie du conduit primaire (9) et du certain nombre de sorties (11) du certain nombre de conduits de gaz auxiliaires (10) au niveau d'un point élevé, par exemple au-dessus, par rapport à la zone cible, par exemple, une zone de culture ou d'un sol d'étable, de préférence, la sortie du conduit primaire (9) et le certain nombre de sorties (11) du certain nombre de conduits auxiliaires (10) sont déplacés au niveau de la position élevée par rapport à la zone cible dans une direction présentant une composante directionnelle perpendiculaire à la direction du flux de gaz primaire.

7. Procédé selon l'une quelconque des revendications précédentes, dans lequel le conduit de gaz primaire (8) comprend une ouverture de déviation de gaz (27), de préférence reliée à un canal de déviation de gaz, pour dévier une partie du flux de gaz primaire dans un conduit de gaz auxiliaire (10), créant ainsi un flux de gaz auxiliaire.

8. Procédé selon l'une quelconque des revendications précédentes, dans lequel des moyens sont prévus pour modifier la vitesse du gaz du flux de gaz forcé dans le certain nombre de conduits auxiliaires (10), tels que des moyens pour réduire la vitesse du gaz d'un flux de gaz auxiliaire, tels que des ouvertures dans le corps d'un conduit auxiliaire (10) en liaison avec l'air extérieur, ou des moyens pour augmenter la vitesse du gaz, tels que des moyens pour diminuer la surface de la section transversale du corps d'un conduit auxiliaire (10), en particulier au niveau de la sortie (11).

9. Dispositif (1) de distribution d'une matière particulaire comprenant des particules, ledit dispositif (1) comprenant :

(A) un réservoir (2) approprié pour contenir les particules, lequel réservoir est pourvu d'un certain nombre de sorties (30) pour les particules ;
(B) un conduit de gaz primaire (8) comportant une première extrémité, une seconde extrémité (9) et un corps creux reliant la première extrémité et la seconde extrémité (9), dans lequel le corps du conduit primaire (8) présente une section transversale, présentant une surface, et un certain nombre d'ouvertures d'accès de particules (28), de préférence reliées à un certain nombre de sorties (30) dans le réservoir (2) ;
(C) un certain nombre de conduits de gaz auxiliaires (10) comportant chacun une première extrémité, une seconde extrémité (11) et un corps creux reliant la première extrémité et la seconde extrémité (11), dans lequel chaque corps de conduit auxiliaire (10) présente une section transversale présentant une surface, où, de préférence, la surface de la section transversale du certain nombre de conduits auxiliaires (10) est inférieure à la surface de la section transversale du conduit primaire (8) et, où un certain nombre de conduits auxiliaires (10) présentent en outre un certain nombre d'ouvertures d'accès de particules (31), de préférence reliées à un certain nombre de sorties (30) dans le réservoir (2) ;
(D) un certain nombre de dispositifs de déplacement de gaz (23) appropriés pour générer un certain nombre de flux de gaz forcés dans le conduit de gaz primaire (8) et dans le certain nombre de conduits de gaz auxiliaires (10), lesquels plusieurs flux de gaz forcés présentent une direction de soufflage et sont appropriés pour transporter les particules dans leur direction de soufflage ;
(E) des moyens pour diriger les particules à partir d'un certain nombre de sorties (30) par le biais des ouvertures d'accès de particules (28, 31) dans le conduit de gaz primaire (8) et un certain nombre de conduits de gaz auxiliaires (10) ;

dans lequel le conduit de gaz primaire (8) et/ou le certain nombre de conduits de gaz auxiliaires (10) et/ou le certain nombre de dispositifs de déplacement de gaz (23) sont conçus de telle sorte que la vitesse du gaz en m/s dans le conduit de gaz primaire est supérieure à la vitesse du gaz en m/s dans le certain nombre de conduits auxiliaires, de telle sorte que le débit de gaz volumétrique en m$^3$/s généré dans le conduit de gaz primaire est supérieur au débit de gaz volumétrique en m$^3$/s dans le certain nombre de conduits de gaz auxiliaires.

10. Dispositif (1) selon la revendication 9, dans lequel le conduit primaire (8) et un certain nombre de conduits auxiliaires (10) présentent une direction au moins sensiblement parallèle et dans lequel, de préférence, la longueur d'un certain nombre de conduits auxiliaires (10) diffère de la longueur du conduit primaire (8).

11. Dispositif (1) selon l'une quelconque des revendications 9 à 10, dans lequel le conduit primaire (8) comporte plusieurs canaux, chaque canal comprenant une entrée, une sortie et un corps creux reliant l'entrée et la sortie, les entrées étant conçues de manière à ce qu'au moins une partie du flux de gaz forcé circule à travers les canaux et les sorties étant conçues de manière à diriger les flux de sortie de gaz dans une direction sensiblement identique.

12. Dispositif (1) selon l'une quelconque des revendications 9 à 11, dans lequel le flux de gaz forcé dans le conduit primaire (8) présente une puissance réglée pour souffler les particules sur une distance axiale maximale d'environ 0,5 à 8 mètres, de préférence d'environ 3 à 6 mètres, plus préférablement d'environ 4 à 6 mètres, de manière davantage préférée d'environ 5 mètres.

13. Dispositif (1) selon l'une quelconque des revendications 9 à 12, comprenant des moyens (27) pour diriger le flux de gaz forcé généré dans le conduit de gaz primaire (1) dans un certain nombre de conduits de gaz auxiliaires (10), et comprenant de préférence en outre des moyens pour réduire la vitesse du gaz du flux de gaz forcé dans un conduit auxiliaire (10).

14. Dispositif (1) selon l'une quelconque des revendications 9 à 13, dans lequel le conduit primaire (8) et le certain nombre de conduits de gaz auxiliaires (10) sont conçus de telle sorte que le flux de gaz ($m^3$/s) généré dans le conduit de gaz primaire (8) est supérieur au flux de gaz ($m^3$/s) dans le certain nombre de conduits de gaz auxiliaires (10), la surface de la section transversale du conduit primaire (8) étant supérieure à la surface de la section transversale du certain nombre de conduits auxiliaires (10).

15. Utilisation d'un dispositif (1) selon l'une quelconque des revendications 9 à 14 dans la distribution d'une matière particulaire comprenant des particules dans une zone cible, telle qu'une culture, où de préférence la matière particulaire est sélectionnée comme une composition comprenant des arthropodes utiles, plus préférentiellement des acariens utiles, tels que des acariens prédateurs ou des acariens proies astigmates, plus préférentiellement des arthropodes utiles comprenant des stades de vie adultes.

**A1**

**A2**
**Figure 1**

**B1**

**B2**

# Figure 1 (Continued)

**C1**

**C2**
**Figure 1 (Continued)**

**D1**

**D2**
**Figure 1 (Continued)**

E1

E2

**Figure 1 (Continued)**

**F1**

**F2**

**Figure 1 (Continued)**

**Figure 2**

**Figure 3**

**Figure 4**

**Figure 5**

**Figure 6**

# Figure 7

|  | Density of particulate material (2) | | | | |
|---|---|---|---|---|---|
| Particle size (1) | 70-250 | 70-100 | 90-150 | 180-240 | 140-200 |
| 0.05 - 15.00 | x | x | x | x | x |
| 0.10-10.00 | x | x | x | x | x |
| 0.25-10.00 | x | x | x | x | x |
| 0.50-2.00 | x | x | x | x | x |
| 0.25-7.00 | x | x | x | x | x |

(1) Particle size in mm. Particle size is average particle size over longest axis of particles.
(2) Density of particulate material is density under standard conditions in grams per liter (g/l).
X marks a combination envisaged within the invention.

# Figure 8

| Lenght (L) of channels | DH/L | | | | | | | |
|---|---|---|---|---|---|---|---|---|
| | 0.01-10 | 0.05-8 | 0.07-6 | 0.07-4 | 0.07-2 | 0.07-1 | 0.07-0.8 | 0.1-0.4 |
| 1-100 | x | x | x | x | x | x | x | x |
| 1-80 | x | x | x | x | x | x | x | x |
| 1-70 | x | x | x | x | x | x | x | x |
| 1-60 | x | x | x | x | x | x | x | x |
| 1-50 | x | x | x | x | x | x | x | x |
| 1-40 | x | x | x | x | x | x | x | x |
| 1-20 | x | x | x | x | x | x | _x_ | _x_ |
| 1-10 | x | x | x | x | x | x | _x_ | **_x_** |
| 1-5 | x | x | x | x | x | x | _x_ | **_x_** |

Length (L) of channels in cm
DH/L is $D_H/L$
x marks a combination envisaged within the invention. Underlined font indicates preferred selections.
Underlined and bold font indicates most preferred selections.

# Figure 9

| Area (A) of outlet | DH/L | | | | | | | |
|---|---|---|---|---|---|---|---|---|
| | 0.01-10 | 0.05-8 | 0.07-6 | 0.07-4 | 0.07-2 | 0.07-1 | 0.07-0.8 | 0.1-0.4 |
| 10-40.000 | x | x | x | x | x | x | x | x |
| 50-10.000 | x | x | x | x | x | x | x | x |
| 80-6.400 | x | x | x | x | x | x | _x_ | **_x_** |
| 80-4.900 | x | x | x | x | x | x | _x_ | **_x_** |
| 80-3.600 | x | x | x | x | x | x | _x_ | **_x_** |
| 200-3.600 | x | x | x | x | x | x | _x_ | **_x_** |
| 80-2.500 | x | x | x | x | x | x | _x_ | **_x_** |
| 80-300 | x | x | x | x | x | x | _x_ | **_x_** |

Area (A) of channels in mm²
DH/L is $D_H/L$
X marks a combination envisaged within the invention. Underlined font indicates preferred selections.
Underlined and bold font indicates most preferred selections.

# Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 16154905 A
- WO 2007136246 A
- WO 2018147733 A

- FR 3103679 A1
- WO 2020145827 A
- WO 2010079353 A
- WO 2006057552 A

### Non-patent literature cited in the description

- **HOGERBRUGGE et al.** Integrated Control in Protected Crops. *Temperature Climate, IOBC/wprs Bulletin*, 2008, vol. 32, 79-82

- **DE MORAES, G. J.** ; **J.A. MCMURTRY** ; **H.A. DENMARK** ; **CB. CAMPOS**. A revised catalog of the mite family Phytoseiidae.. Magnolia Press Auckland New Zealand, 2004